(19) Europäisches Patentamt
European Patent Office
Office européen des brevets

(11) **EP 4 512 835 A1**

(12) **EUROPEAN PATENT APPLICATION**
published in accordance with Art. 153(4) EPC

(43) Date of publication:
**26.02.2025 Bulletin 2025/09**

(21) Application number: **23791905.5**

(22) Date of filing: **19.04.2023**

(51) International Patent Classification (IPC):
*C08F 20/00* [(2006.01)]    *B32B 27/16* [(2006.01)]
*C08F 2/44* [(2006.01)]    *C08F 20/26* [(2006.01)]
*C08F 220/26* [(2006.01)]    *C08F 290/02* [(2006.01)]

(52) Cooperative Patent Classification (CPC):
**B32B 27/16; C08F 2/44; C08F 20/00; C08F 20/26;
C08F 220/26; C08F 290/02**

(86) International application number:
**PCT/JP2023/015664**

(87) International publication number:
**WO 2023/204257 (26.10.2023 Gazette 2023/43)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **20.04.2022 JP 2022069541**

(71) Applicants:
• **Toyo Kohan Co., Ltd.**
  **Tokyo 141-8260 (JP)**
• **Toyo Seikan Group Holdings, Ltd.**
  **Shinagawa-ku**
  **Tokyo 141-8627 (JP)**
• **Nitto Denko Corporation**
  **Ibaraki-shi, Osaka 567-8680 (JP)**

(72) Inventors:
• **HIRAYAMA, Sakiko**
  **Kudamatsu-shi, Yamaguchi 744-8611 (JP)**
• **HENMI, Yuusuke**
  **Kudamatsu-shi, Yamaguchi 744-8611 (JP)**
• **HIRAGOORI, Kaori**
  **Kudamatsu-shi, Yamaguchi 744-8611 (JP)**
• **MASUSAKI, Masashi**
  **Kudamatsu-shi, Yamaguchi 744-8611 (JP)**
• **MURAKAMI, Takuo**
  **Yokohama-shi, Kanagawa 240-0062 (JP)**
• **NAKAMURA, Kozo**
  **Ibaraki-shi, Osaka 567-8680 (JP)**
• **MUKADEYAMA, Shimpei**
  **Ibaraki-shi, Osaka 567-8680 (JP)**
• **YOSHIKAWA, Takahiro**
  **Ibaraki-shi, Osaka 567-8680 (JP)**

(74) Representative: **Kraus & Lederer PartGmbB**
**Thomas-Wimmer-Ring 15**
**80539 München (DE)**

(54) **ACTIVE-ENERGY-RAY-CURABLE RESIN COMPOSITION, CURED PRODUCT, AND LAMINATE**

(57)    Provided is an active energy ray-curable resin composition comprising at least one of a component (a1) and a component (a2), wherein the total amount of the component (a1) and the component (a2) is 5% by weight or more and 70% by weight or less relative to 100% by weight of the entire active energy ray-curable resin composition, absorbance values $(A_0)$ and $(A_1)$ in an IR spectrum obtained in FT-IR measurement satisfy $(A_1)/(A_0) < 7.9$, and the composition has a refractive index of 1.405 or more and less than 1.505,

where the component (a1) is a compound having one ethylenically unsaturated group and having a molecular weight of 90 or more and less than 300,

the component (a2) is a 1,6-diene type divinyl compound having a molecular weight of 90 or more and less than 300,

$(A_0)$ is the maximum value of the absorbance at a wave number in the range of 2900 to 2960 $cm^{-1}$, and

$(A_1)$ is the maximum value of the absorbance at a wave number in the range of 1610 to 1700 $cm^{-1}$ and a wave number in the range of 1750 to 1780 $cm^{-1}$.

**Description**

TECHNICAL FIELD

The present invention relates to an active energy ray-curable resin composition which has high transparency, allows an effective suppression of change in the hue caused by a light guide distance, and is suitable for optical applications.

BACKGROUND ART

Liquid crystal display devices are frequently used as display devices for a variety of electronic devices. Recently, size reduction in such electronic devices has been further promoted, which leads to a requirement for size reduction and weight reduction of liquid crystal display devices.

In such liquid crystal display devices, optical functional sheets utilizing actions such as reflection, refraction, and scattering or composite sheets thereof are mainly used. A variety of optical properties are imparted to such optical functional sheets by forming an active energy ray-curable resin layer such as a UV-curable resin layer on resin film surfaces.

For example, Patent Document 1 discloses that when a methacrylic resin for a light guide plate contains 0.1 ppm to 10 ppm of a fluorescent bleaching agent, an excellent side light-type plane illumination can be obtained, in which the color tone is appropriately improved and unevenness is reduced without reducing light usage efficiency.

RELATED ART DOCUMENTS

PATENT DOCUMENTS

Patent Document 1: JP H08-231808 A

SUMMARY OF THE INVENTION

PROBLEM TO BE SOLVED BY THE INVENTION

On the other hand, the present inventors, who have conducted research, have found that the above-mentioned optical functional sheet integrated with a light guide plate significantly affects the chromaticity distribution of light extractable from the light guide plate when light is guided to the UV-curable resin layer. Specifically, the present inventors have found that light in a wavelength range of 400 to 500 nm attenuates due to a photopolymerization initiator for forming the UV-curable resin layer or the structure derived from a material constituting the polymer, and emission light from the light guide body becomes yellow. In particular, in a single surface input-type plane light source device, in which a light guide body having a light entering end surface and a surface opposite to the light entering end surface and having a distance between the surfaces of 350 mm or more (light guide body having a light guide distance of 350 mm or more) is used, a significant increase in such yellowing was observed in a region with a long light guide distance. In other words, the yellowing of the emission light from the light guide body on the light-emitting surface of the light guide body occurred in a region with a long light guide distance, rather than it occurred uniformly across the entire surface.

The present inventors, who have conducted research, have observed that the bleaching agent used in the technique disclosed in Patent Document 1 above generally absorbs light in a wavelength range of 300 nm to 400 nm and emits light in a wavelength range of 400 nm to 500 nm. Since the light emission range of a white light emitting LED does not substantially contain the above-mentioned wavelength range (300 nm to 400 nm), fluorescent emission does not occur even if a fluorescent bleaching agent is contained in a methacrylic resin for a light guide body as in the technique disclosed in Patent Document 1.

An object of the present invention is to provide an active energy ray-curable resin composition which has high transparency, allows an effective suppression of change in the hue caused by a light guide distance, and thus allows a suppression in yellowing of emission light on a light-emitting surface with a small reduction in transmittance even when used in combination with a primary light source composed of a white LED.

MEANS FOR SOLVING PROBLEMS

The present inventors, who have conducted extensive research to achieve the above object, have found that the above object can be solved by an active energy ray-curable resin composition comprising a component (a1) which is a compound having one ethylenically unsaturated group and having a molecular weight of 90 or more and less than 300, and/or a component (a2) which is a 1,6-diene type divinyl compound having a molecular weight of 90 or more and less than 300, wherein the absorbance in an IR spectrum obtained in FT-IR measurement is controlled within a specific range, and thus have completed the present invention.

Specifically, the present invention provides an active energy ray-curable resin composition comprising at least one of a component (a1) and a component (a2) below, wherein the total amount of the component (a1) and the component (a2) is 5% by weight or more and 70% by weight or less based on 100% by weight of the entire active energy ray-curable resin composition, and absorbance values $(A_0)$ and $(A_1)$ in an IR spectrum obtained in FT-IR measurement satisfy $(A_1)/(A_0) < 7.9$,

where the component (a1) is a compound having one ethylenically unsaturated group and having a molecular weight of 90 or more and less than 300,
the component (a2) is a 1,6-diene type divinyl compound having a molecular weight of 90 or more and less than 300,
$(A_0)$ is the maximum value of the absorbance at a wave number in the range of 2900 to 2960 cm$^{-1}$, and
$(A_1)$ is the maximum value of the absorbance at a wave number in the range of 1610 to 1700 cm$^{-1}$ and a wave number in the range of 1750 to 1780 cm$^{-1}$.

In the active energy ray-curable resin composition according to the present invention, preferably, the component (a1) is at least one selected from the group consisting of (meth)acrylic acid esters having an oxygen-containing heterocycle structure, (meth)acrylic acid esters having an aromatic ring, chain (meth)acrylamides, and (meth)acrylic acid esters having a hydroxyl group.

In the active energy ray-curable resin composition according to the present invention, preferably, the component (a2) is an $\alpha$-allyloxymethyl acrylic acid ester.

Preferably, the active energy ray-curable resin composition according to the present invention further comprises at least one of a component (b1), a component (b2), and a component (b3) below,

where the component (b1) is a compound having two or more ethylenically unsaturated groups and having a molecular weight of 300 or more and less than 1,000,
the component (b2) is a compound having two or more ethylenically unsaturated groups and having a weight average molecular weight of 1,000 or more and less than 150,000, and
the component (b3) is an acrylic polymer having a weight average molecular weight of 1,000 or more and less than 150,000.

In the active energy ray-curable resin composition according to the present invention, preferably, the component (b2) is at least one selected from the group consisting of polyester (meth)acrylate, polyether (meth)acrylate, epoxy (meth)acrylate, urethane (meth)acrylate, and acrylic (meth)acrylate.

Preferably, the active energy ray-curable resin composition according to the present invention further comprises an $\alpha$-hydroxyketone compound as a photoinitiator. In the active energy ray-curable resin composition according to the present invention, preferably, the viscosity at 25°C is 4 mPa·s or larger.

In the active energy ray curable composition according to the present invention, preferably, the refractive index is 1.405 or more and less than 1.505.

Preferably, the active energy ray-curable resin composition according to the present invention is used for forming a cured product layer on a resin substrate.

The present invention provides a cured product formed from the active energy ray-curable resin composition.

In the cured product according to the present invention, preferably, the absorbance values $(A_0)$ and $(A_1)$ in an IR spectrum obtained in FT-IR measurement satisfy $(A_1)/(A_0) < 4.9$.

In the cured product according to the present invention, preferably, the cured product has a refractive index of 1.441 or more and less than 1.541.

The present invention also provides a laminate including a cured product layer on a resin substrate, the cured product layer being composed of the cured product.

In the laminate according to the present invention, preferably, the resin substrate is one selected from the group consisting of acrylic resin substrates, carbonate resin substrates, cyclic olefin resin substrates, and cellulose resin substrates.

Preferably, the laminate according to the present invention includes a primer layer between the resin substrate and the cured product layer.

In the laminate according to the present invention, preferably, the primer layer is a urethane resin layer.

In the laminate according to the present invention, preferably, the primer layer has a thickness of 0.05 to 1 $\mu$m.

Preferably, the laminate according to the present invention further includes a diffusion region having a thickness of 1 $\mu$m or more in the resin substrate, a component of the cured product being present in the diffusion region.

In the laminate according to the present invention, preferably, the 90° peel strength between each pair of the layers constituting the laminate is 0.3 N/25 mm or more.

In the laminate according to the present invention, preferably, the resin substrate has a thickness of 10 to 100 $\mu$m.

In the laminate according to the present invention, preferably, the cured product layer has a thickness of 1 to 50 $\mu$m.

Preferably, the laminate according to the present invention has a total light transmittance of 90% or more.

In the laminate according to the present invention, preferably, the cured product layer has a refractive index of 1.441 or more and less than 1.541.

In the laminate according to the present invention, preferably, the cured product layer has a surface with an indentation hardness of 30 N/mm$^2$ or more.

In the laminate according to the present invention, preferably, the surface of the cured product layer is finely patterned.

The present invention also provides a cured product formed from an active energy ray-curable resin composition comprising at least one of a component (a1) and a component (a2) below,

wherein absorbance values ($A_0$) and ($A_1$) in an IR spectrum obtained in FT-IR measurement satisfy $(A_1)/(A_0) < 4.9$, and the cured product has a refractive index of 1.441 or more and less than 1.541,

where the component (a1) is a compound having one ethylenically unsaturated group and having a molecular weight of 90 or more and less than 300,

the component (a2) is a 1,6-diene type divinyl compound having a molecular weight of 90 or more and less than 300,

($A_0$) is the maximum value of the absorbance at a wave number in the range of 2900 to 2960 cm$^{-1}$, and

($A_1$) is the maximum value of the absorbance at a wave number in the range of 1610 to 1700 cm$^{-1}$ and a wave number in the range of 1750 to 1780 cm$^{-1}$.

EFFECTS OF INVENTION

The present invention provides an active energy ray-curable resin composition which has high transparency, allows an effective suppression of change in the hue caused by a light guide distance, and is suitable for optical applications.

BRIEF DESCRIPTION OF DRAWINGS

[Fig. 1] Fig. 1 is a cross-sectional view illustrating a configuration of the laminate according to an embodiment of the present invention.

[Fig. 2] Fig. 2 illustrates one example of an apparatus for producing the laminate according to an embodiment of the present invention using a film mold.

[Fig. 3] Fig. 3 illustrates another example of the apparatus for producing the laminate according to an embodiment of the present invention.

[Fig. 4] Fig. 4 is a diagram for illustrating a patterned film according to Example of the present invention.

[Fig. 5] Fig. 5 is a diagram for illustrating a method of measuring $\Delta$xy.

DESCRIPTION OF EMBODIMENTS

<Active energy ray-curable resin composition>

The active energy ray-curable resin composition according to the present invention comprises the component (a1) and/or the component (a2), wherein the total amount of the component (a1) and the component (a2) is 5% by weight or more and 70% by weight or less based on 100% by weight of the entire active energy ray-curable resin composition, and absorbance values ($A_0$) and ($A_1$) in an IR spectrum obtained in FT-IR measurement satisfy $(A_1)/(A_0) < 7.9$,

where the component (a1) is a compound having one ethylenically unsaturated group and having a molecular weight of 90 or more and less than 300,

the component (a2) is a 1,6-diene type divinyl compound having a molecular weight of 90 or more and less than 300,

($A_0$) is the maximum value of the absorbance at a wave number in the range of 2900 to 2960 cm$^{-1}$, and

($A_1$) is the maximum value of the absorbance at a wave number in the range of 1610 to 1700 cm$^{-1}$ and a wave number in the range of 1750 to 1780 cm$^{-1}$.

The component (a1) is a compound having one ethylenically unsaturated group and having a molecular weight of 90 or more and less than 300. Although it is sufficient that the component (a1) has a molecular weight in the range of 90 or more and less than 300, the component (a1) has a molecular weight of preferably 100 to 250, more preferably 140 to 210. The component (a1) is preferably one selected from the group consisting of (meth)acrylic acid esters having an oxygen-containing heterocycle structure, (meth)acrylic acid esters having an aromatic ring, chain (meth)acrylamides, and (meth)acrylic acid esters having a hydroxyl group.

Specific examples of the component (a1) include tetrahydrofurfuryl acrylate (such as "Viscoat #150 THFA" available from OSAKA ORGANIC CHEMICAL INDUSTRY LTD.); acrylates having a non-aromatic heteroatom-containing cyclic structure, such as β-hydroxy-γ-butyrolactone methacrylate; benzyl acrylate (such as "Viscoat #160 BZA" available from OSAKA ORGANIC CHEMICAL INDUSTRY LTD.); phenol EO modified acrylate (such as "ARONIX M-101A" available from TOAGOSEI CO., LTD.); isobornyl (meth)acrylate; cyclohexyl acrylate; dicyclopentanyl acrylate; 4-t-butylcyclohexyl acrylate; cyclic trimethylolpropane formal acrylate (such as "Viscoat #200 CTFA" available from OSAKA ORGANIC CHEMICAL INDUSTRY LTD.); tetrahydrodicyclopentadienyl methacrylate; 4-hydroxybutyl acrylate (such as "4HBA" available from Shynryo Corporation); 4-hydroxybutyl acrylate glycidyl ether (such as "4HBAGE" available from Shynryo Corporation); 2-hydroxybutyl methacrylate (such as "Light Ester HOB(N) available from Kyoeisha Chemical Co., Ltd.); (3,4-epoxycyclohexyl)methyl acrylate; 3-methoxypropyl acrylate; dicyclopentenyl acrylate (such as "FA-511AS" available from Showa Denko Materials Co., Ltd.); dicyclopentenyloxyethyl acrylate (such as "FA-512AS" available from Showa Denko Materials Co., Ltd.); dicyclopentanyl acrylate (such as "FA-513AS" available from Showa Denko Materials Co., Ltd.); dicyclopentanyl methacrylate (such as "FA-513M" available from Showa Denko Materials Co., Ltd.); acryloylmorpholine (such as "ACMO" available from KJ Chemicals Corporation); 2-hydroxybutyl methacrylate; benzyl acrylate (such as "Viscoat #160 BZA" available from OSAKA ORGANIC CHEMICAL INDUSTRY LTD.); diethyl acrylamide (such as "DEAA" available from KJ Chemicals Corporation); dimethyl acrylamide (such as "DMAA" available from KJ Chemicals Corporation); and the like.

The component (a2) is a 1,6-diene type divinyl compound having a molecular weight of 90 or more and less than 300. Although it is sufficient that the component (a2) has a molecular weight in the range of 90 or more and less than 300, the component (a2) has a molecular weight of preferably 100 to 250, more preferably 120 to 180. The component (a2) is preferably an α-allyloxymethyl acrylic acid ester (such as "AOMA" available from NIPPON SHOKUBAI CO., LTD.).

For the contents of the component (a1) and the component (a2) in the active energy ray-curable resin composition according to the present invention, the total content of the component (a1) and the component (a2) is 5% by weight or more and 70% by weight or less, preferably 10 to 60% by weight, more preferably 15 to 55% by weight relative to 100% by weight of the entire active energy ray-curable resin composition. An excessively small total content of the component (a1) and the component (a2) may lead to an excessive increase in viscosity of the active energy ray-curable resin composition, which may increase air bubbles or reduce transferability of a fine pattern in some cases. It may also cause insufficient adhesion to the resin substrate, which may result in gaps at the interface in some cases. These increase light scattering of the cured product, which is likely to reduce transparency or cause an inferior hue due to the light guide distance. On the other hand, an excessively large total content of the component (a1) and the component (a2) may lead to an excessive reduction in viscosity of the active energy ray-curable resin composition, which may make it difficult to obtain a desired thickness or to handle in some cases. It may also reduce the film forming properties of a cured product thereof.

In the active energy ray-curable resin composition according to the present invention, not only a specific amount of the component (a1) and/or the component (a2) is contained, but also absorbance values $(A_0)$ and $(A_1)$ in an IR spectrum obtained in FT-IR measurement satisfy $(A_1)/(A_0) < 7.9$.

Here, $(A_0)$ is the maximum value of the absorbance at a wave number in the range of 2900 to 2960 $cm^{-1}$, and $(A_1)$ is the maximum value of the absorbance at a wave number in the range of 1610 to 1700 $cm^{-1}$ and in the range of 1750 to 1780 $cm^{-1}$.

The absorbance value $(A_0)$ represents an absorbance value derived from the C-H stretching vibration of a methylene group. The absorbance value $(A_1)$ represents an absorbance derived from the stretching vibration of a carbonyl group of an amide group and/or the stretching vibration of an ethylenically unsaturated bond (at a wave number in the range of 1610 to 1700 $cm^{-1}$) and an absorbance of the stretching vibration of a carbonyl group of an amide group (at a wave number in the range of 1750 to 1780 $cm^{-1}$). In other words, the active energy ray-curable resin composition according to the present invention contains an amide group in an amount controlled to a specific amount or smaller. According to the present invention, when the active energy ray-curable resin composition contains the component (a1) and/or the component (a2) in a specific amount described above and is controlled such that the absorbance values $(A_0)$ and $(A_1)$ satisfy $(A_1)/(A_0) < 7.9$, such a composition can have high transparency and allows an effective suppression of change in the hue caused by the light guide distance.

Although it is sufficient that the absorbance values $(A_0)$ and $(A_1)$ satisfy $(A_1)/(A_0) < 7.9$, these satisfy preferably $(A_1)/(A_0) < 7.1$, more preferably $(A_1)/(A_0) < 6.1$. The lower limit of $(A_1)/(A_0)$ is usually $(A_1)/(A_0) > 0.1$, although not particularly limited thereto. The value of $(A_1)/(A_0)$ can be controlled by adjusting the type and amount of an amide group-containing compound in the active energy ray-curable resin composition.

The active energy ray-curable resin composition according to the present invention has a refractive index of preferably 1.405 or more and less than 1.505, more preferably 1.415 to 1.495.

Preferably, the active energy ray-curable resin composition according to the present invention contains at least one of a component (b1), a component (b2), and a component (b3) below, in addition to the component (a1) and/or the component (a2). Because such an active energy ray-curable resin composition containing at least one of the component (b1), the component (b2), and the component (b3) can ensure favorable viscosity for maintaining a coating before curing, a coating having high stability can be formed, and the film forming properties can be improved.

Here, the component (b1) is a compound having two or more ethylenically unsaturated groups and having a molecular weight of 300 or more and less than 1,000,

> the component (b2) is a compound having two or more ethylenically unsaturated groups and having a weight average molecular weight of 1,000 or more and less than 150,000, and
> the component (b3) is an acrylic polymer having a weight average molecular weight of 1,000 or more and less than 150,000.

The component (b1) is a compound having two or more ethylenically unsaturated groups and having a molecular weight of 300 or more and less than 1,000. Although it is sufficient that the component (b1) has a molecular weight in the range of 300 or more and less than 1,000, the component (b1) has a molecular weight of preferably 300 to 900, more preferably of 300 to 800. Specific examples of the component (b1) include polyether acrylates such as polypropylene glycol diacrylate and polyethylene glycol diacrylate (such as "ARONIX M-220" and "ARONIX M-240" available from TOAGOSEI CO., LTD.); glycol acrylic acid adducts such as hydroxypivalic acid neopentyl glycol acrylic acid adducts (such as "LIGHT ACRYLATE HPP-A" available from Kyoeisha Chemical Co., Ltd.); pentaerythritol tri- and tetraacrylates (such as "ARONIX M-450" available from TOAGOSEI CO., LTD.); dipentaerythritol penta- and hexaacrylates (such as "ARONIX M-400" and "ARONIX M-402" available from TOAGOSEI CO., LTD.); diglycerol EO modified acrylate (such as "ARONIX M-460" available from TOAGOSEI CO., LTD.); tricyclodecane dimethanol diacrylate (such as "EBECRYL 130" available from DAICEL-ALLNEX LTD.); bisphenol A epoxy acrylate; and the like.

The component (b2) is a compound having two or more ethylenically unsaturated groups and having a weight average molecular weight of 1,000 or more and less than 150,000. Although it is sufficient that the component (b2) has a weight average molecular weight in the range of 1,000 or more and less than 150,000, the component (b2) has a weight average molecular weight of preferably 1,000 to 140,000, more preferably of 1,000 to 130,000. The weight average molecular weight is a value determined against polystyrene standards in GPC measurement. The component (b2) is preferably at least one selected from the group consisting of polyester (meth)acrylate, polyether (meth)acrylate, epoxy (meth)acrylate, urethane (meth)acrylate, and acrylic (meth)acrylate.

Specific examples of the component (b2) include polyester acrylate (such as "ARONIX M-8060", "ARONIX M-9050", and "ARONIX M-6100" available from TOAGOSEI CO., LTD., "EBECRYL 1830" available from DAICEL-ALLNEX LTD., "MIRAMER PS6430" and "MIRAMER PS9600F" available from MIWON); acrylic acid adducts of epoxy esters (such as "Epoxy Ester 80MFA" such as Kyoeisha Chemical Co., Ltd.); urethane acrylate (such as "UV-7000B" available from Mitsubishi Chemical Corporation); polyacrylic acrylate (such as "OAP-2531", "MAP-2801", and "AHC-9206AC80" available from Negami Chemical Industrial Co., Ltd.); and the like.

The component (b3) is an acrylic polymer having a weight average molecular weight of 1,000 or more and less than 150,000. Although it is sufficient that the component (b3) has a weight average molecular weight in the range of 1,000 or more and less than 150,000, the component (b3) has a weight average molecular weight of preferably 1,000 to 140,000, more preferably 1,000 to 130,000. The weight average molecular weight is a value determined against polystyrene standards in GPC measurement. Specific examples of the component (b3) include acrylic polymers (such as "EBECRYL 1710", "EBECRYL 303", "EBECRYL 767", and "EBECRYL 305" available from DAICEL-ALLNEX LTD., "MIRAMER SC9213" available from MIWON, "DIANAL BR-50", "DIANAL BR-80", "DIANAL BR-105", "DIANAL BR-106", "DIANAL BR-107", "DIANAL BR-115", "DIANAL MB-2539", "DIANAL MB-2660", and "DIANAL MB-7497" available from Mitsubishi Chemical Corporation, "DEGALAN LP64/12", "DEGALAN PM381N", and "DEGALAN 64/12N" available from ROHM Co., Ltd.); and the like.

For the contents of the component (b1), the component (b2), and the component (b3) in the active energy ray-curable resin composition according to the present invention, the total content of the component (b1), the component (b2), and the component (b3) is 30% by weight or more, preferably 40 to 95% by weight, more preferably 45 to 90% by weight relative to 100% by weight of the entire active energy ray-curable resin composition. When the total content of the component (b1), the component (b2), and the component (b3) falls within the above ranges, favorable viscosity for maintaining a coating before curing can be ensured, and thus a coating having high stability can be formed, and the film forming properties can be improved.

The active energy ray-curable resin composition according to the present invention may also contain an additional curable monomer other than the component (a1) and/or the component (a2), and the component (b1), the component (b2), and the component (b3) optionally used. Examples of such an additional curable monomer include compounds having two or more ethylenically unsaturated groups and having a molecular weight of less than 300, and specific examples thereof include 1,6-hexanediol diacrylate (such as "HDDA" available from DAICEL-ALLNEX LTD.), dipropylene glycol diacrylate (such as "M222" available from MIWON), trimethylolpropane triacrylate (such as "M-309" available from TOAGOSEI CO., LTD.), and the like.

The content of the additional curable monomer in the active energy ray-curable resin composition according to the present invention is preferably 0 to 60% by weight, more preferably 0 to 55% by weight, still more preferably 0 to 50% by weight relative to 100% by weight of the entire active energy ray-curable resin composition.

In the active energy ray-curable resin composition according to the present invention, the molecular weight of each of the components having a molecular weight of less than 1,000 is identified by mass spectrometry (MS), and that of each of the components having a molecular weight of 1,000 or more is a weight average molecular weight (Mw) determined against polystyrene standards in gel permeation chromatography (GPC). The weight average molecular weight (Mw) can be measured, for example, using a GPC apparatus (product name "HLC-8320GPC built-in RI detector/UV-8320", available from Tosoh Corporation), two analysis columns TSKgel SuperMultiporeHZ-M, two reference columns TSKgel SuperHM-H, and an RI detector as a detector, under a condition where the sample injection amount is 10 $\mu$L, the sample concentration is 0.1 w/v%, the eluent is chloroform, the measurement temperature is 40°C, and the flow rate is 0.35 mL/min. The calibration curve can be created, for example, by performing measurement using standard polystyrenes (product name "PStQuick MP-M", available from Tosoh Corporation) having a known molecular weight, plotting the elution time against the molecular weight value for each of the peaks from the measured standard polystyrenes, followed by approximation with a cubic formula.

The components in the active energy ray-curable resin composition according to the present invention, and unreacted components thereof even after curing of the composition can be detected by gas chromatography-mass spectrometry (GC-MS), NMR, or the like.

Preferably, the active energy ray-curable resin composition according to the present invention contains a photoinitiator. Examples of photoinitiators include acylphosphine oxide compounds, $\alpha$-hydroxyketone compounds, intramolecular hydrogen abstracting compounds, $\alpha$-aminoketone compounds, oxime ester compounds, and the like. Among these, $\alpha$-hydroxyketone compounds are preferred.

Specific examples of acylphosphine oxide compounds include bis-2,6-dimethoxybenzoyl-2,4,4-trimethylpentylphosphine oxide, 2,4,6-trimethylbenzoyl-diphenyl-phosphine oxide (such as "Omnirad TPO" available from IGM Resins B.V.), bis(2,4,6-trimethylbenzoyl)phenylphosphine oxide (such as "Omnirad 819" available from IGM Resins B.V.), ethoxy(2,4,6-trimethylbenzoyl)phenylphosphine oxide (such as "Omnirad TPO-L" available from IGM Resins B.V.), and the like.

Specific examples of $\alpha$-hydroxyketone compounds include 2-hydroxy-2-methylpropiophenone (such as "Omnirad 1173" available from IGM Resins B.V.), 2-hydroxy-1-{4-[4-(2-hydroxy-2-methyl-propionyl)-benzyl]-phenyl}-2-methyl-propan-1-one (such as "Omnirad 127" available from IGM Resins B.V.), 2-hydroxy-4'-hydroxyethoxy-2-methylpropiophenone (such as "Omnirad 2959" available from IGM Resins B.V.), 1-hydroxycyclohexyl phenyl ketone (such as "Omnirad 184" available from IGM Resins B.V.), oligo{2-hydroxy-2-methyl-1-[4-(1-methylvinyl)phenyl]propanone} (such as "ESACURE ONE" available from IGM Resins B.V.), and the like.

Specific examples of intramolecular hydrogen abstracting compounds include phenylglyoxylic acid methyl ester (such as "Omnirad MBF" available from IGM Resins B.V.), bis($\eta$5-2,4-cyclopentadien-1-yl)bis[2,6-difluoro-3-(1H-pyrrol-1-yl)phenyltitanium] (such as "Omnirad 784" available from IGM Resins B.V.), 2,2-dimethoxy-1,2-diphenylethan-1-one (such as "Omnirad 651" available from IGM Resins B.V.), and the like.

Specific examples of $\alpha$-aminoketone compounds include 2-methyl-4'-methylthio-2-morpholinopropiophenone (such as "Omnirad 907" available from IGM Resins B.V.), 2-benzyl-2-dimethylamino-1-(4-morpholinophenyl)-butanone-1 (such as available from "Omnirad 369" available from IGM Resins B.V.), 2-(dimethylamino)-2-[(4-methylphenyl)methyl]-1-[4-(4-morpholinyl)phenyl]-1-butanone (such as "Omnirad 379EG" available from IGM Resins B.V.), and the like.

Specific examples of oxime ester compounds include 1-[4-(phenylthio)-2-(O-benzoyloxime)] (Irgacure OXE01), 1-[9-ethyl-6-(2-methylbenzoyl)-9H-carbazol-3-yl]-1-(O-acetyloxime) (Irgacure OXE02), Irgacure OXE03, Irgacure OXE04 (these are available from BASF SE), and the like.

The content of the photoinitiator is preferably 0.2 to 8% by weight, more preferably 1 to 5% by weight, still more preferably 1.5 to 4% by weight relative to 100% by weight of the entire active energy ray-curable resin composition according to the present invention. When the content of the photoinitiator falls within the above ranges, the active energy ray-curable resin composition can have sufficient curability while it has high transparency and allows an effective suppression of change in the hue caused by the light guide distance.

The active energy ray-curable resin composition according to the present invention may also contain additives such as an antioxidant, a photostabilizer, and a polymerization inhibitor in the range not inhibiting the effects of the present invention.

Specific examples of antioxidants include pentaerythritol tetrakis[3-(3,5-di-tert-butyl-4-hydroxyphenyl)propionate ("IRGANOX 1010"), thiodiethylenebis[3-(3,5-di-tert-butyl-4-hydroxyphenyl)propionate ("IRGANOX 1035"), octadecyl-3-(3,5-di-tert-butyl-4-hydroxyphenyl)propionate ("IRGANOX 1076"), "IRGANOX 1135", "IRGANOX 1330", 4,6-bis(octylthiomethyl)-o-cresol ("IRGANOX 1520L"), "IRGANOX 1726", "IRGANOX 245", "IRGANOX 259", "IRGANOX 3114", "IRGANOX 3790", "IRGANOX 5057", and "IRGANOX 565" (these are available from BASF SE); "Adekastab AO-20", "Adekastab AO-30", "Adekastab AO-40", "Adekastab AO-50", "Adekastab AO-60", and "Adekastab AO-80" (these are available from ADEKA Corporation); "JP-360", "JP-308E", and "JPE-10" (these are available from Johoku Chemical Co., Ltd.); "Sumilizer BHT", "Sumilizer BBM-S", and "Sumilizer GA-80" (these are available from Sumitomo Chemical Co., Ltd.); and the like.

Specific examples of photostabilizers include "TINUVIN 111FDL", "TINUVIN 123", "TINUVIN 144", "TINUVIN 152", "TINUVIN 292", "TINUVIN 622", "TINUVIN 770", "TINUVIN 765", "TINUVIN 780", "TINUVIN 905", "TINUVIN 5100", "TINUVIN 5050", "TINUVIN 5060", "TINUVIN 5151", "CHIMASSORB 119FL", "CHIMASSORB 944FL", and "CHIMASSORB 944LD" (these are available from BASF SE), "Adekastab LA-52", "Adekastab LA-57", "Adekastab LA-62", "Adekastab LA-67", "Adekastab LA-63P", "Adekastab LA-68LD", "Adekastab LA-77", "Adekastab LA-82", and "Adekastab LA-87" (these are available from ADEKA Corporation), and the like.

Specific examples of polymerization inhibitors include quinones such as hydroquinone, para-benzoquinone, and 2,5-di-tert-butylbenzoquinone; phenols such as 4-methoxyphenol and 6-tert-butyl-2,4-xylenol; sulfur-containing compounds such as phenothiazine, thiourea, and sodium N,N-diethyldithiocarbamate; nitroso compounds such as N-nitrosodiphenylamine and N-nitrosophenylhydroxylamine aluminum salt; piperidine-1-oxyls such as 4-hydroxy-2,2,6,6-tetramethylpiperidin-1-oxyl; phosphine compounds such as tributylphosphine, trioctylphosphine, tricyclohexylphosphine, triphenylphosphine, and tribenzylphosphine; phosphine oxide compounds such as trioctylphosphine oxide and triphenylphosphine oxide; phosphite compounds such as triphenyl phosphite and trisnonylphenyl phosphite; and the like.

The content of the additives such as an antioxidant, a photostabilizer, and a polymerization inhibitor is preferably 0.001 to 3% by weight, more preferably 0.01 to 1.5% by weight, still more preferably 0.02 to 1% by weight, most preferably 0.03 to 0.3% by weight relative to 100% by weight of the entire active energy ray-curable resin composition according to the present invention. When the content of the additives falls within the above ranges, the active energy ray-curable resin composition can have sufficient curability while it has high transparency and allows an effective suppression of change in the hue caused by the light guide distance.

The active energy ray-curable resin composition according to the present invention has a viscosity at 25°C of preferably 4 mPa·s or larger, more preferably 7 mPa·s or larger, still more preferably 10 mPa·s or larger. When the viscosity falls within the above ranges, favorable applicability can be obtained. The viscosity at 25°C can be measured using a B type viscometer, for example.

The active energy ray-curable resin composition according to the present invention can be suitably used to form a cured product layer on a variety of resin substrates because it has high transparency and allows an effective suppression of change in the hue caused by the light guide distance. In particular, the active energy ray-curable resin composition according to the present invention allows a reduction in change $\triangle xy$ in the hue caused by the distance between two points, and especially, allows a reduction in change $\triangle xy$ in the hue even when the light guide distance is relatively long. When such an active energy ray-curable resin composition is used in combination with a primary light source composed of a white LED, yellowing of emission light on the light-emitting surface can be suppressed with a small reduction in transmittance. For this reason, the active energy ray-curable resin composition according to the present invention can be suitably used in applications to light guide plates for a variety of liquid crystal display devices, such as liquid crystal display devices including a white LED, and lighting devices, and allows an effective suppression of change in a color nuance even when it is used in applications to light guide plates for a variety of liquid crystal display devices and lighting devices.

<Cured product>

The cured product according to the present invention is formed from the above-mentioned active energy ray-curable resin composition according to the present invention.

The cured product according to the present invention can be formed by curing the active energy ray-curable resin composition through irradiation of the active energy ray-curable resin composition according to the present invention with an active energy ray such as ultraviolet light.

In the cured product according to the present invention, the absorbance values $(A_0)$ and $(A_1)$ in an IR spectrum obtained in FT-IR satisfy preferably $(A_1)/(A_0) < 4.9$, more preferably $(A_1)/(A_0) < 4.8$, still more preferably $(A_1)/(A_0) < 4.2$. The lower limit of $(A_1)/(A_0)$ is usually $(A_1)/(A_0) > 0.1$, although not particularly limited. The value of $(A_1)/(A_0)$ of the cured product can be controlled by a method of adjusting the value of $(A_1)/(A_0)$ of the active energy ray-curable resin composition according to the present invention or a method of adjusting the curing conditions.

That the cured product according to the present invention contains the above components can be verified, for example, by performing solvent extraction, and analyzing the extracted solution by GC-MS or NMR. The chemical structure of the cured product according to the present invention can be revealed by analysis by pyrolysis GC-MS or solid NMR.

<Laminate>

The laminate according to the present invention includes a cured product layer on a resin substrate, the cured product layer being composed of a cured product formed using the active energy ray-curable resin composition according to the present invention.

In the laminate according to the present invention, a cured product layer may be directly formed on a resin substrate, the cured product layer being composed of a cured product formed from the active energy ray-curable resin composition according to the present invention. Preferably, these are disposed with a primer layer interposed therebetween. Specifically, it is preferred that a primer layer and a cured product layer be formed on a resin substrate in this order.

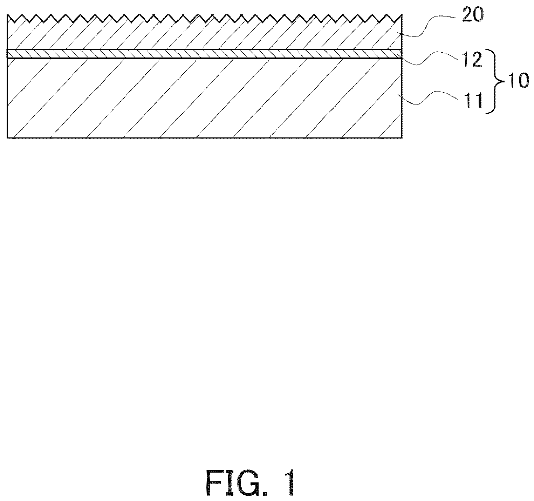

Here, Fig. 1 is a cross-sectional view illustrating a configuration of the laminate according to one embodiment of the present invention. As illustrated in Fig. 1, the laminate according to one embodiment has a laminate structure in which an active energy ray-curable resin layer 20 is formed on a substrate film 10. In the laminate according to one embodiment, the substrate film 10 includes a resin substrate 11 and a primer layer 12 formed thereon. As illustrated in Fig. 1, the cured product layer 20 is formed on the resin substrate 11 with a primer layer 12 interposed therebetween. Hereinafter, the laminate according to one embodiment illustrated in Fig. 1 will be described as one example.

<Resin substrate 11>

Examples of the resin substrate 11 include, but should not be limited to, acrylic resin substrates, carbonate resin substrates, cyclic olefin resin substrates, cellulose resin substrates, and the like. Among these, acrylic resin substrates are preferred because of their high optical properties.

The acrylic resin substrate can be a film-shaped substrate containing an acrylic resin, and is not particularly limited. Examples of the acrylic resin include poly(meth)acrylic acid esters such as polymethyl methacrylate, methyl methacrylate-(meth)acrylic acid copolymer, methyl methacrylate-(meth)acrylic acid ester copolymer, methyl methacrylate-acrylic acid ester-(meth)acrylic acid copolymer, methyl (meth)acrylatestyrene copolymer, polymers having an alicyclic hydrocarbon group (such as methyl methacrylate-cyclohexyl methacrylate copolymer and methyl methacrylate-norbornyl (meth)acrylate copolymer), and the like. The term "(meth)acrylic" indicates acrylic and/or methacrylic.

The acrylic resin substrate may also contain a thermoplastic resin other than the acrylic resin, in addition to the acrylic resin. Examples of the thermoplastic resin other than the acrylic resin include olefin polymers, vinyl halide polymers, polyester, polyacetal, polycarbonate, polyether ether ketone, polysulfone, polyethersulfone, polyoxybenzylene, polyamidimide, rubber polymers, and the like. The content of the acrylic resin in the resin substrate 11 is preferably 80% by weight or more, more preferably 90% by weight or more, still more preferably 95% by weight or more, particularly preferably substantially 100% by weight of the acrylic resin.

Although the resin substrate 11 can have any thickness without limitation, the thickness is preferably 10 to 100 $\mu$m, more preferably 18 to 42 $\mu$m from the viewpoint of strength and optical properties. The resin substrate 11 may be a stretched film of a resin such as an acrylic resin, and for example, by stretching, the optical properties may be adjusted and the thickness may be controlled to fall within the above ranges.

<Primer layer 12>

The primer layer 12 is a layer formed on the resin substrate 11, and is usually a layer formed to enhance the adhesion between the resin substrate 11 and the cured product layer 20 formed from the active energy ray-curable resin composition according to the present invention. Although the primer layer 12 is not particularly limited, to further enhance the adhesion, the primer layer 12 is preferably a layer containing a urethane resin. In other words, the primer layer 12 is preferably a urethane resin layer.

The urethane resin is a reaction product of a polyol and a polyisocyanate. Examples of the polyol include polymer polyols such as polyacrylic polyol, polyester polyol, and polyether polyol, and the like. Examples of the polyisocyanate include aliphatic diisocyanates, alicyclic diisocyanates, aromatic diisocyanates, aromatic aliphatic diisocyanates, and the like.

The urethane resin layer may contain inorganic fine articles in addition to the urethane resin. Examples of the inorganic fine particles include titania, alumina, calcium carbonate, talc, silica, clay, calcined kaolin, calcined calcium silicate, calcium silicate hydrate, aluminum silicate, magnesium silicate, calcium phosphate, and the like.

The urethane resin layer can be formed, for example, by using an aqueous dispersion solution of urethane resin particles dispersed in an aqueous medium such as water, and applying the aqueous dispersion solution of urethane resin particles onto the resin substrate 11, followed by drying. In this process, the above-mentioned inorganic fine particles may be contained in the aqueous dispersion solution of urethane resin particles, and further a cross-linking agent may be contained therein. When a cross-linking agent is contained, cross-linking of the urethane resin particles allows introduction of a cross-linked structure, which can further improve adhesion durability. A cross-linking agent to be used can be a cross-linking agent having an amino group, an oxazoline group, an epoxy group, a carbodiimide group, or the like.

Although the primer layer 12 can have any thickness without limitation, the thickness is preferably 0.05 to 1 $\mu$m, more preferably 0.1 to 0.6 $\mu$m, still more preferably 0.15 to 0.4 $\mu$m from the viewpoint of adhesion to the cured product layer 20 and optical properties.

The 90° peel strength of the primer layer 12 to the resin substrate 11 is preferably 0.3 N/25 mm or more, more preferably 1.0 N/25 mm or more, still more preferably 2.0 N/25 mm or more from the viewpoint of reliability.

<Cured product layer 20>

The cured product layer 20 is a layer composed of a cured product formed from the active energy ray-curable resin composition according to the present invention. The cured product layer 20 is a cured resin layer formed by applying the active energy ray-curable resin composition according to the present invention onto the primer layer 12 formed on the resin substrate 11 to form a layer made of the active energy ray-curable resin composition, and curing the layer using an active energy ray such as ultraviolet light.

As illustrated in Fig. 1, the cured product layer 20 may have fine depressions and projections (fine pattern) on the surface thereof. Such a cured product layer having fine depressions and projections can demonstrate optical properties attributed to these fine depressions and projections. More specifically, fine depressions and projections cause action such as reflection, refraction, or scattering, so that optical properties can be demonstrated utilizing action such as reflection, refraction, or scattering.

Suitable examples of a method of forming fine depressions and projections on the surface of the cured product layer 20 include, but should not be limited to, a method of pressing a releasing film for patterning a fine pattern (hereinafter, referred to as "film mold" depending on cases) onto the surface of a layer composed of the active energy ray-curable resin composition before curing, curing the layer by irradiating the film mold with an active energy ray, and then peeling off the film mold, as described later. In this method, it is necessary to cure the layer composed of the active energy ray-curable resin composition to form the cured product layer 20, and then peel off the film mold in a favorable manner. Thus, the 90° peel strength of the surface of the cured product layer 20 to the film mold is preferably less than 1.9 N/25 mm, more preferably 0.9 N/25 mm or less, still more preferably 0.2 N/25 mm or less. Examples of the method of forming fine depressions and projections include not only methods using a film mold, but also methods using a mold with engraved fine depressions and projections.

Although an embodiment in which fine depressions and projections are formed on the surface of the cured product layer 20 has been exemplified in Fig. 1, the present invention is not limited to such an embodiment. Another embodiment is possible in which fine depressions and projections are not formed on the surface of the cured product layer 20.

The thickness of the cured product layer 20 is preferably 1 to 50 $\mu$m, more preferably 5 to 30 $\mu$m, still more preferably 7 to 20 $\mu$m from the viewpoint of strength and optical properties. In the case where the cured product layer 20 has fine depressions and projections on the surface thereof as illustrated in Fig. 1, the thickness from a projection of fine depressions and projections to the interface between the cured product layer 20 and the primer layer 12 can be defined as the thickness of the cured product layer 20.

From the viewpoint of reliability, the 90° peel strength of the cured product layer 20 to the primer layer 12 is preferably 0.3 N/25 mm or more, more preferably 1.0 N/25 mm or more, still more preferably 2.0 N/25 mm or more.

The indentation hardness of the surface of the cured product layer 20 is preferably 30 N/mm$^2$ or more, more preferably 40 N/mm$^2$ or more, still more preferably 60 N/mm$^2$ or more.

Although an embodiment in which the cured product layer 20 is directly formed on the primer layer 12 has been illustrated in Fig. 1, a diffusion region in which the component of the primer layer 12 is present may be formed in the primer layer 12 and the resin substrate 11. The thickness of the diffusion region is preferably 1 $\mu$m or more, more preferably 1.5 $\mu$m or more, still more preferably 2.0 $\mu$m or more.

In the case where a diffusion region is formed, the 90° peel strength of the diffusion region to the primer layer 12 is preferably 0.3 N/25 mm or more, more preferably 1.0 N/25 mm or more, still more preferably 2.0 N/25 mm or more from the viewpoint of reliability. Similarly, in the case where a diffusion region is formed, the 90° peel strength of the cured product layer 20 to the diffusion region is preferably 0.3 N/25 mm or more, more preferably 1.0 N/25 mm or more, still more preferably 2.0 N/25 mm or more from the viewpoint of reliability.

The laminate according to the present invention has a total light transmittance of preferably 90% or more, more preferably 90.5% or more, still more preferably 91% or more. The laminate according to the present embodiment has a refractive index of preferably 1.441 or more and less than 1.541, more preferably 1.47 or more and less than 1.530.

<Method of producing laminate>

Next, a method of producing the laminate according to the present invention will be described.

Hereinafter, a production method when the cured product layer 20 has fine depressions and projections (fine pattern) on the surface thereof as illustrated in Fig. 1 will be described.

Initially, a primer layer 12 is formed on a resin substrate 11. Thereby, a substrate film 10 including the primer layer 12 formed on the resin substrate 11 is obtained. When the primer layer 12 is a urethane resin layer, the substrate film 10 can be obtained by applying an aqueous dispersion solution of urethane resin particles dispersed in an aqueous medium, such as water, onto the resin substrate 11, and drying the applied solution to form a urethane resin layer as the primer layer 12. In this process, when the aqueous dispersion solution of urethane resin particles contains a cross-linking agent, drying is performed, and then a cross-linking reaction is performed by heating. After the primer layer 12 is formed, the substrate film 10 including the primer layer 12 formed on the resin substrate 11 may be stretched as needed.

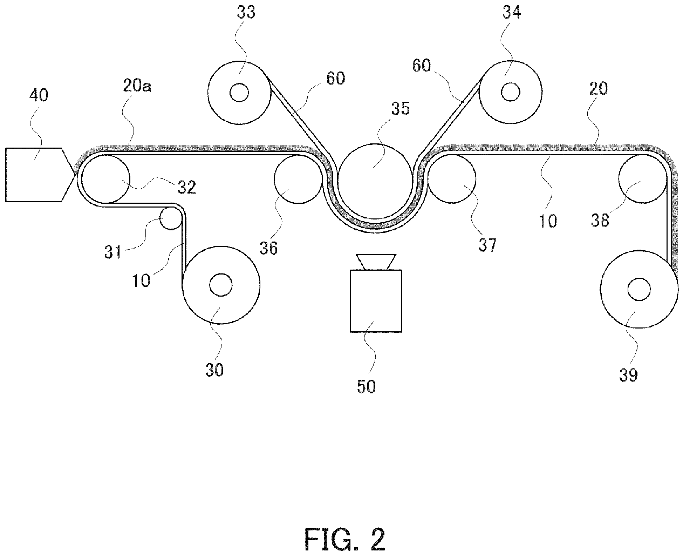

Next, a cured product layer 20 is formed on the substrate film 10 thus obtained. The cured product layer 20 can be formed using a production apparatus illustrated in Fig. 2, for example.

In the production apparatus illustrated in Fig. 2, initially, the substrate film 10 is continuously fed from a substrate feeding roll 30 through a guide roll 31 to a T-die 40, where the active energy ray-curable resin composition according to the present invention for forming the cured product layer 20 is applied onto the surface of the substrate film 10. Thus, a layer 20a composed of the active energy ray-curable resin composition is formed on the surface thereof. The thickness of the layer 20a composed of the active energy ray-curable resin composition is controlled by adjusting the clearance formed by the T-die 40 and a nip roll 32 or the feeding rate.

The production apparatus illustrated in Fig. 2 is configured such that a film mold 60 is continuously fed from a film mold feeding roll 33. Then, using a laminate roll 35 and an upstream back-up roll 36, the film mold 60 is overlaid on the substrate film 10 including the layer 20a composed of the active energy ray-curable resin composition. Here, the film mold 60 has predetermined fine depressions and projections on a surface facing the layer 20a composed of the active energy ray-curable resin composition, and the substrate film 10, the layer 20a composed of the active energy ray-curable resin composition, and the film mold 60 are overlaid in this order in the state where the surface having predetermined fine depressions and projections is in contact with the layer 20a composed of the active energy ray-curable resin composition. Thus, a laminate is prepared.

Then, the laminate including the substrate film 10, the layer 20a composed of the active energy ray-curable resin composition, and the film mold 60 overlaid in this order is irradiated with an active energy ray such as ultraviolet light from an active energy ray irradiation apparatus 50 such as an ultraviolet light irradiation apparatus, thereby curing the curable resin component constituting the layer 20a composed of the active energy ray-curable resin composition in the state where the predetermined fine depressions and projections formed on the surface of the film mold 60 are transferred onto the layer 20a. As a result, a cured product layer 20 having desired fine depressions and projections on the surface thereof as illustrated in Fig. 1 is obtained. Subsequently, after the laminate is subjected to the curing reaction through irradiation with an active energy ray such as ultraviolet light, the laminate passes through a gap between the laminate roll 35 and a downstream back-up roll 37, and the film mold 60 is peeled off from the substrate film 10 including the cured product layer 20 formed thereon. The film mold 60 is wound around a film mold winding roll 34, and the substrate film 10 including the cured product layer 20 formed thereon is wound around a substrate winding roll 39 through a guide by a guide roll 38. Alternatively, as needed, without peeling off the film mold 60 from the substrate film 10 including the cured product layer 20 formed thereon, the film mold 60 may be used as a protective film by winding the substrate film 10 including the cured product layer 20 formed thereon and the film mold 60 around the substrate winding roll 39 through a guided by the guide roll 38. Alternatively, the film mold 60 may be peeled off from the substrate film 10 including the cured product layer 20 formed thereon, and then, a protective film may be bonded to the surface of the cured product layer 20, followed by winding around the substrate winding roll 39.

The production apparatus illustrated in Fig. 2 continuously produces the laminate including the cured product layer 20 formed on the substrate film 10. Thus, the laminate including the cured product layer 20 formed on the substrate film 10 has desired fine depressions and projections on the surface thereof as a result of transfer of the predetermined fine depressions and projections formed on the film mold 60.

Any resin material can be used to form a resin film which forms the film mold 60, and a thermoplastic resin is preferred. Examples thereof include polyester resins such as polyethylene terephthalate (PET) and polybutylene terephthalate (PBT), acrylic resins such as polymethyl methacrylate (PMMA), carbonate resins such as polycarbonate (PC), amide resins such as nylon 6, cyclic olefin resins (COP), ethylene-vinyl alcohol copolymers (EVOH), polyphenylene sulfide (PPS), and the like. Two or more of these may be used as a laminate or as a mixture.

Examples of a resin material for a protective film include, but should not be limited to, polyethylene (PE), polypropylene (PP), and the like. Two or more of these may be used as a laminate or as a mixture.

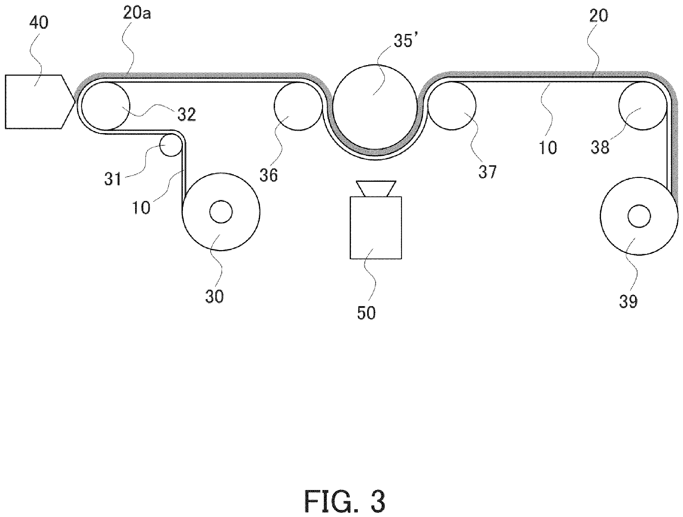

Note that instead of the film mold 60, the cured product layer 20 including desired fine depressions and projections on the surface thereof can also be produced, as illustrated in Fig. 3, using a laminate roll 35' having predetermined fine depressions and projections formed on the surface thereof, which are brought into direct contact with the layer 20a composed of the active energy ray-curable resin composition formed on the substrate film 10. A schematic view of the production apparatus is shown in Fig. 3.

Since the laminate according to the present invention includes a cured layer formed from the above-mentioned active energy ray-curable resin composition according to the present invention, it has high transparency, and a change in the hue caused by the light guide distance is effectively suppressed. In particular, the laminate according to the present invention can reduce the change $\Delta xy$ in the hue in a distance between two points, and especially can reduce the change $\Delta xy$ in the hue even when the light guide distance is relatively long. Thereby, yellowing of emission light on the light-emitting surface can be suppressed with a small reduction in transmittance even when the laminate is used in combination with a primary light source composed of a white LED. For this reason, the laminate according to the present invention can be suitably used in applications to light guide plates for a variety of liquid crystal display devices, such as liquid crystal display devices including a white LED, and lighting devices, and allows an effective suppression of change in a color nuance even when it is used in applications to light guide plates for a variety of liquid crystal display devices and lighting devices.

EXAMPLES

Hereinafter, the present invention will be more specifically described by way of Examples, but these Examples should not be construed as limitations to the present invention.

Properties were evaluated by the following methods.

<Viscosity of active energy ray-curable resin composition>

The viscosity of each of active energy ray-curable resin compositions was measured using a B type viscometer (product name "Analog Viscometer LVT", available from BROOKFIELD) and using a small sample adaptor (sample chamber SC4-13R(P)) at a temperature 25°C and a spindle SC4-18 at a rotational speed of 3 to 60 rpm.

<Absorbance ratio>

Active energy ray-curable resin compositions and cured products of the active energy ray-curable resin compositions were subjected to FT-IR measurement by a one-time reflection ATR method using a Fourier transform infrared spectrophotometer (product name "(FT/IR-6600)", available from JASCO Corporation). The measurement was performed under the following conditions.

The number of integrations: 16 times (the same applies to background measurement)

wave number optical resolution: 4 $cm^{-1}$
range of wave number for measurement: 600 to 4000 $cm^{-1}$
ATR crystal: diamond
angle of incidence: 45°

When one point in the obtained IR spectrum was subjected to baseline correction such that the absorbance with a wave number of 2000 $cm^{-1}$ was 0, the maximum value of the absorbance at a wave number in the range of 2900 to 2960 $cm^{-1}$ was defined as ($A_0$), and the maximum value of the absorbance at a wave number in the range of 1610 to 1700 $cm^{-1}$ and the range of 1750 to 1780 $cm^{-1}$ was defined as ($A_1$), and the absorbance ratio ($A_1$)/($A_0$) was determined.

<Reaction ratio of cured product>

Active energy ray-curable resin compositions and cured products of the active energy ray-curable resin compositions were subjected to FT-IR measurement by a one-time reflection ATR method using a Fourier transform infrared spectrophotometer (product name "(FT/IR-6600)", available from JASCO Corporation). The measurement was performed under the following conditions.

The number of integrations: 16 times (the same applies to background measurement)

wave number optical resolution: 4 $cm^{-1}$
range of wave number for measurement: 600 to 4000 $cm^{-1}$
ATR crystal: diamond
angle of incidence: 45°

When in the obtained IR spectrum of each of the active energy ray-curable resin compositions, a straight line connecting bottoms of the absorption peak derived from the stretching vibration of a carbonyl group of an ester at a wave number around 1720 cm$^{-1}$ was defined as a baseline, and a line was vertically drawn from the vertex of the peak to the baseline, the length from the point of intersection to the vertex of the peak was defined as peak height ($A_{0\_1720}$). Next, when a straight line connecting bottoms of the absorption peak derived from C-H vending of an ethylenically unsaturated group at a wave number around 810 cm$^{-1}$ was defined as a baseline, and a line was vertically drawn from the vertex of the peak to the baseline, the length from the point of intersection to the vertex of the peak was defined as peak height ($A_{0\_810}$). In the IR spectrum of each of the cured products of the active energy ray-curable resin compositions, peak heights ($A_{\_1720}$) and ($A_{\_810}$) were determined in the same manner as above.

Using the values obtained as above, the reaction ratio of curable components constituting the active energy ray-curable resin composition was determined from the following formula:

$$\text{reaction ratio (\%)} = (1 - ((A_{\_810})/(A_{\_1720}))/((A_{0\_810})/(A_{0\_1720}))) \times 100$$

<Total light transmittance, haze value>

Laminates were measured for total light transmittance and haze value using a turbidity meter (product name "haze meter NDH2000", available from Nippon Denshoku Industries Co., Ltd.) in accordance with JIS K 7105 and JIS K 7136.

<Refractive index>

For active energy ray-curable resin compositions, the refractive index at 589 nm (D-ray) was measured using an Abbe refractometer (product name "NAR-1 T SOLID", available from ATAGO CO., LTD.) at a measurement temperature of 20°C. For cured products of the active energy ray-curable resin compositions, measurement was performed in the same manner as above except that diiodomethane was used as the contact solution.

<Indentation hardness of cured layer 20>

For laminates, the indentation hardness was measured using a nanoindentation tester (product name "ENT-5", available from ELIONIX Inc.) and a Berkovich indenter under an indentation load of 0.1 mN, and was defined as the indentation hardness of the cured layer.

<Thickness of diffusion region>

For laminates, a cross-section of each laminate was prepared using an ultramicrotome, and using a Raman spectrophotometer (product name "NRS-5500", available from JASCO Corporation), line analysis was performed on the cured layer, the urethane resin layer, and the acrylic resin substrate in this order under the following conditions.

light exposure time: 60 sec
the number of integrations: one time
range: 600 to 3000 cm$^{-1}$
grating: L600/B500 nm
laser: 532.31 nm
slit: $\phi$25 mm

The obtained Raman spectrum was standardized with a maximum peak intensity of 2800 to 3000 cm$^{-1}$, and the distance from the attenuation start point to the attenuation end point of a peak intensity derived from the component of the cured layer was defined as the thickness of the diffusion region.

<Example 1>

20.6 Parts by weight of an aqueous polyurethane (product name "SUPERFLEX 210R, solid content: 34% by weight", available from Dai-ichi Kogyo Seiyaku Co., Ltd.), 5.2 parts by weight of an oxazaline-containing polymer aqueous solution (product name "Epocros WS-700, solid content: 25% by weight", available from NIPPON SHOKUBAI CO., LTD.), 2.8 parts by weight of 1% by weight aqueous ammonia, 7.5 parts by weight of a 20% aqueous dispersion of colloidal silica (product name "Quartron PL-3", available from FUSO CHEMICAL CO., LTD.), and 63.9 parts by weight of pure water were mixed to prepare an easy-to-bond composition, and the composition was applied onto the surface of an acrylic resin film.

The acrylic resin film was stretched two times in the longitudinal direction (MD) and the transverse direction (TD), respectively, with a simultaneous biaxial stretching tenter in a heating furnace at 140°C, thereby obtaining a substrate film 10 including a urethane resin layer (primer layer 12) having a thickness of 0.3 $\mu$m on the acrylic resin substrate (resin substrate 11) having a thickness of 40 $\mu$m.

In the next step, an active energy ray-curable resin composition having a composition below was applied onto the obtained substrate film 10, and a smooth polyethylene terephthalate film (product name "EMBLET S-25", available from Unitika Ltd.) was disposed thereon. Thereafter, the active energy ray-curable resin composition was cured using an UV irradiation apparatus with an UV irradiation amount of 971 mJ/cm$^2$ to obtain a laminate in which a cured layer 20 (thickness of cured layer 20: 15 $\mu$m) composed of the active energy ray-curable resin composition was formed on the substrate film 10. Then, the polyethylene terephthalate film was peeled off to obtain a laminate, which was then subjected to a variety of measurements. The results are shown in Table 1.

The refractive index of the cured product constituting the cured layer 20 was evaluated as follows: An active energy ray-curable resin composition having a composition below was applied onto a smooth polyethylene terephthalate film, and another smooth polyethylene terephthalate film was disposed thereon. Thereafter, the active energy ray-curable resin composition was cured using a UV irradiation apparatus with an UV irradiation amount of 971 mJ/cm$^2$ to obtain a laminate in which the cured layer 20 (thickness of cured layer 20: 40 $\mu$m) composed of the active energy ray-curable resin composition was formed on the polyethylene terephthalate film. Then, the polyethylene terephthalate films on both surfaces were peeled off to obtain an active energy ray-curable resin composition, which was then measured.

In measurements of 90° peel strength of the cured layer 20 and $\Delta$xy, a sample for measurement was prepared and measured by the following methods.

<Composition of active energy ray-curable resin composition>

· tetrahydrofurfuryl acrylate (product name "Viscoat#150", available from OSAKA ORGANIC CHEMICAL INDUSTRY LTD., molecular weight: 156.2, component (a1)): 40 parts by weight
· polypropylene glycol diacrylate (product name "ARONIX M-220", available from TOAGOSEI CO., LTD., molecular weight: 300.3, component (b1)): 50 parts by weight
· bifunctional polyacrylic acrylate (product name "EBECRYL 1710", available from DAICEL-ALLNEX LTD., weight average molecular weight: 39429, component (b3)): 10 parts by weight
· 1-hydroxycyclohexyl phenyl ketone (product name "Omnirad 184", available from IGM Resins B.V., $\alpha$-hydroxyketone photopolymerization initiator): 2 parts by weight

<90° Peel strength of cured layer 20>

In the above procedure, instead of the polyethylene terephthalate film, an easy-to-bond PET film (38 $\mu$m, COSMOSHINE A4300, available from TOYOBO CO., LTD.) was disposed, and the active energy ray-curable resin composition was cured, thus obtaining a laminate in which a cured layer 20 was formed on a substrate film 10. The laminate in the state where the easy-to-bond PET was overlaid was used to prepare a sample measuring 25 mm in width $\times$ 150 mm in length, and the surface of the acrylic resin substrate of the laminate was bonded and fixed to a test plate with a double-sided adhesive tape. Subsequently, using a tensile tester (product name "Tensilon Universal tester RTC-1210A", available from ORIENTEC CO., LTD.), the 90° peel strength [unit: N/25 mm] of the bonded surface between the urethane resin layer and the cured layer 20 was measured by clamping ends of the easy-to-bond PET film and subjecting the film to a 90 degrees peel test at a pulling rate of 200 mm/min. The result is shown in Table 1.

<Measurement of $\Delta$xy>

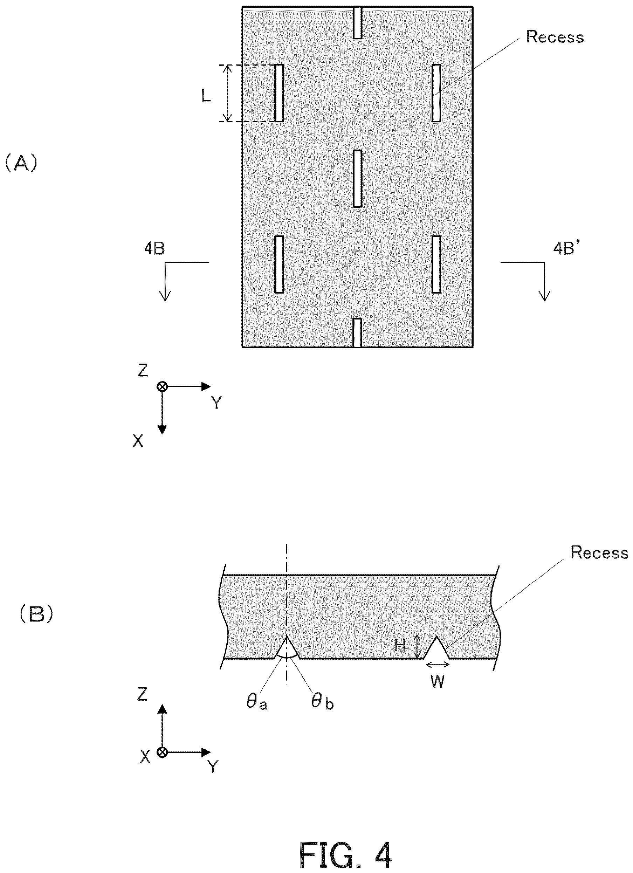

Initially, a film with a fine pattern (patterned film) was produced in accordance with the method disclosed in JP 2013-524288 A. Specifically, an active energy ray-curable resin composition was applied onto the surface of a film made of polymethyl methacrylate (PMMA), an optical pattern was then embossed, followed by irradiation with ultraviolet light to produce the target patterned film. The total thickness of the patterned film was 55 $\mu$m. (A) of Fig. 4 shows a plan view of part of the produced patterned film when viewed from a lateral surface thereof. (B) of Fig. 4 shows a cross-section taken along 4B-4B' in (A) of Fig. 4. Recesses each having a length L of 80 $\mu$m, a width W of 14 $\mu$m, and a depth H of 10 $\mu$m and having a triangular cross-section were spaced from each other with an interval of 155 $\mu$m in the X-axial direction. Further, such patterned recesses were spaced from each other with a width D of 100 $\mu$m in the Y-axial direction. The surface of the produced patterned film had recesses with a density of 3612/cm$^2$. In (B) of Fig. 4, $\theta$a and $\theta$b were each 41°, and the ratio of the area occupied by the recesses when seen in planar view of the produced patterned film from the finely patterned surface was 4.05%.

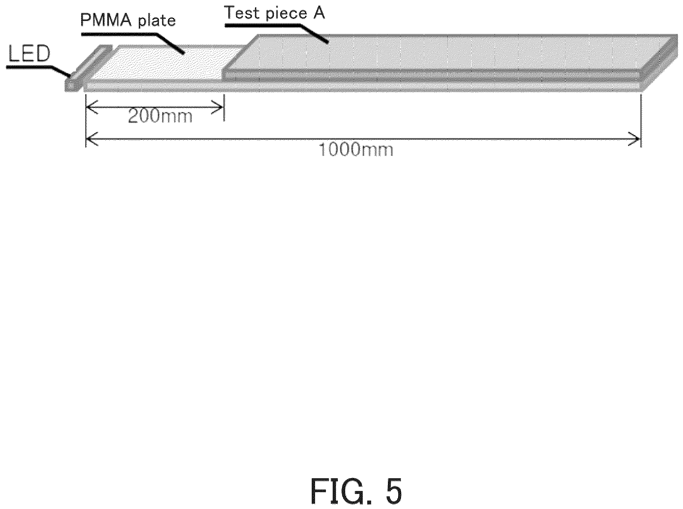

The fine pattern-formed surface of the patterned film obtained above was bonded to an optical adhesive tape (product name "CS9862", available from NITTO DENKO CORPORATION) having a thickness of 50 $\mu$m after one of the releasing films of the optical adhesive tape was peeled off. Thus, a test piece A was obtained. Then, the test piece A was cut into a size having a width of 150 mm and a length of 800 mm. The other releasing film of the optical adhesive tape was peeled off, and the exposed surface of the adhesive layer of the optical adhesive tape was bonded to a polymethyl methacrylate (PMMA) plate (width: 150 mm, length: 1,000 mm, thickness: 5 mm, product name "ACRYLITE", available from Mitsubishi Chemical Corporation) with a space of 200 mm from one end of the plate, obtaining a test piece B. Then, as illustrated in Fig. 5, using a LED light source (color temperature: 5000 K), light was caused to enter the test piece B from the end thereof spaced 200 mm from the test piece A. Using a two-dimensional spectrophotometer (product name "SR-5000", available from TOPCON CORPORATION), the entire test piece B was measured. The chromaticities (xy, CIE1931) 250 mm and 950 mm from the light entering end were extracted, and $\Delta xy$ was calculated from the following formula. It can be determined that a smaller value of $\Delta xy$ indicates that the change in the hue caused by the light guide distance is more effectively suppressed and thus, the change in color caused by the light guide distance is smaller.

[Equation 1]

$$\Delta xy = \sqrt{(x_{250} - x_{950})^2 + (y_{250} - y_{950})^2}$$

<Examples 2 to 30>

Laminates in which a cured layer 20 was formed were obtained in the same manner as in Example 1 except that active energy ray-curable resin compositions having a composition shown in Tables 1 to 3 were used as the active energy ray-curable resin composition, and were evaluated likewise. The results are shown in Tables 1 to 3.

<Comparative Examples 1 to 8>

Laminates in which a cured layer 20 was formed were obtained in the same manner as in Example 1 except that active energy ray-curable resin compositions having a composition shown in Table 4 were used as the active energy ray-curable resin composition, and were evaluated likewise. The results are shown in Table 4.

[Table 1]

Table 1

| | | | Examples | | | | | | | | | |
|---|---|---|---|---|---|---|---|---|---|---|---|---|
| | | | 1 | 2 | 3 | 4 | 5 | 6 | 7 | 8 | 9 | 10 |
| Composition of active energy ray-curable resin composition (parts by weight) | Components (a1), (a2) | THFA (molecular weight: 156.2) | 40.0 | 60.0 | 60.0 | 60.0 | | | | | | |
| | | ACMO (molecular weight: 141.2) | | | | | 40.0 | | | | | |
| | | DEAA (molecular weight: 127.1) | | | | | | 40.0 | | | | |
| | | DMAA (molecular weight: 99.1) | | | | | | | 40.0 | | | |
| | | 2HBMA (molecular weight: 158.2) | | | | | | | | 40.0 | | |
| | | M-101A (molecular weight: 236.3) | | | | | | | | | 40.0 | |
| | | BZA (molecular weight: 162.2) | | | | | | | | | | 40.0 |
| | | AOMA (molecular weight: 156.2) | | | | | | | | | | |
| | | VMOX (molecular weight: 127.1) | | | | | | | | | | |
| | | NVP (molecular weight: 111.1) | | | | | | | | | | |
| | | IBOA (molecular weight: 208.3) | | | | | | | | | | |
| | Components (b1), (b2), (b3) | M-220 (molecular weight: 300.3) | 50.0 | 30.0 | 30.0 | 30.0 | 50.0 | 50.0 | 50.0 | 50.0 | 50.0 | 50.0 |
| | | HPP-A (molecular weight: 312.4) | | | | | | | | | | |
| | | M-8060 (weight average molecular weight: 2479) | | | | | | | | | | |
| | | EBECRYL 1830 (weight average molecular weight: 3698) | | | | | | | | | | |
| | | EBECRYL 1710 (weight average molecular weight: 39429) | 10.0 | 10.0 | 10.0 | 10.0 | 10.0 | 10.0 | 10.0 | 10.0 | 10.0 | 10.0 |
| | | BR-107 (weight average molecular weight: 74660) | | | | | | | | | | |
| | | DEGALAN 64/12N (weight average molecular weight: 64716) | | | | | | | | | | |
| | | MB-7497 (weight average molecular weight: 56353) | | | | | | | | | | |

EP 4 512 835 A1

|  |  |  | Examples | | | | | | | | | |
|---|---|---|---|---|---|---|---|---|---|---|---|---|
|  |  |  | 1 | 2 | 3 | 4 | 5 | 6 | 7 | 8 | 9 | 10 |
|  |  | M-6100 (weight average molecular weight: 1662) |  |  |  |  |  |  |  |  |  |  |
|  |  | EBECRYL 130 (molecular weight: 304.4) |  |  |  |  |  |  |  |  |  |  |
|  |  | Epoxy Ester 3000A (weight average molecular weight: 1160) |  |  |  |  |  |  |  |  |  |  |
|  |  | EBECRYL 767 (weight average molecular weight: 19447) |  |  |  |  |  |  |  |  |  |  |
|  | Curable monomers other than components (a1), (a2), (b1), (b2), (b3) | HDDA (molecular weight: 226.3) |  |  |  |  |  |  |  |  |  |  |
|  |  | DPGDA (molecular weight: 242.3) |  |  |  |  |  |  |  |  |  |  |
|  |  | TMPTA (molecular weight: 296.3) |  |  |  |  |  |  |  |  |  |  |
|  | Photopolymerization initiator | HCPK | 2.0 | 2.0 | 3.0 | 5.0 | 2.0 | 2.0 | 2.0 | 2.0 | 2.0 | 2.0 |
|  |  | TPO |  |  |  |  |  |  |  |  |  |  |
|  |  | BAPO |  |  |  |  |  |  |  |  |  |  |
|  |  | HMPP |  |  |  |  |  |  |  |  |  |  |
|  | Additives | AO-60 |  |  |  |  |  |  |  |  |  |  |
|  |  | Irganox 1035 |  |  |  |  |  |  |  |  |  |  |
| Contents of components (wt%) | Components (a1), (a2) | | 39.2 | 58.8 | 58.3 | 57.1 | 39.2 | 39.2 | 39.2 | 39.2 | 39.2 | 39.2 |
|  | Components (b1), (b2), (b3) | | 58.8 | 39.2 | 38.8 | 38.1 | 58.8 | 58.8 | 58.8 | 58.8 | 58.8 | 58.8 |
|  | Curable monomers other than components (a1), (a2), (b1), (b2), (b3) | | 0.0 | 0.0 | 0.0 | 0.0 | 0.0 | 0.0 | 0.0 | 0.0 | 0.0 | 0.0 |
|  | Photopolymerization initiator | | 2.0 | 2.0 | 2.9 | 4.8 | 2.0 | 2.0 | 2.0 | 2.0 | 2.0 | 2.0 |
|  | Additives | | 0.0 | 0.0 | 0.0 | 0.0 | 0.0 | 0.0 | 0.0 | 0.0 | 0.0 | 0.0 |
| Laminate | Thickness of resin substrate 11 [μm] | | 40 | 40 | 40 | 40 | 40 | 40 | 40 | 40 | 40 | 40 |
|  | Thickness of primer layer 12 [μm] | | 0.3 | 0.3 | 0.3 | 0.3 | 0.3 | 0.3 | 0.3 | 0.3 | 0.3 | 0.3 |
|  | Thickness of cured layer 20 [μm] | | 15 | 15 | 15 | 15 | 15 | 15 | 15 | 15 | 15 | 15 |

(continued)

| | | Examples | | | | | | | | | |
|---|---|---|---|---|---|---|---|---|---|---|---|
| | | 1 | 2 | 3 | 4 | 5 | 6 | 7 | 8 | 9 | 10 |
| Results of evaluations | Thickness of diffusion layer [$\mu$m] | 1 | 3 | 2 | 1 | 1 | 1 | 1 | 1 | 0 | 0 |
| | Liquid viscosity of active energy ray-curable resin composition [mPa · s] | 13 | 10 | 10 | 10 | 26 | 10 | 8 | 18 | 29 | 11 |
| | Absorbance ratio $(A_1)/(A_0)$ in active energy ray-curable resin composition | 1.4 | 1.3 | 1.3 | 1.2 | 6.1 | 4.4 | 7.1 | 3.2 | 1.3 | 2.0 |
| | Absorbance ratio $(A_1)/(A_0)$ in cured product | 1.0 | 1.0 | 1.0 | 1.0 | 4.2 | 3.9 | 4.8 | 2.0 | 1.0 | 1.3 |
| | Reaction ratio of cured product [%] | 95.2 | 93.9 | 93.9 | 93.9 | 92.6 | 95.7 | 91.6 | 88.7 | 95.0 | 95.1 |
| | Total light transmittance [%] | 92.3 | 92.3 | 92.2 | 92.2 | 92.1 | 92.3 | 92.3 | 92.2 | 92.1 | 91.9 |
| | Haze [%] | 0.70 | 0.66 | 0.67 | 0.70 | 0.79 | 1.17 | 0.68 | 1.04 | 0.73 | 0.85 |
| | Refractive index of active energy ray-curable resin composition | 1.461 | 1.462 | 1.462 | 1.464 | 1.481 | 1.464 | 1.467 | 1.457 | 1.480 | 1.484 |
| | Refractive index of cured film | 1.500 | 1.499 | 1.499 | 1.500 | 1.513 | 1.502 | 1.505 | 1.495 | 1.516 | 1.524 |
| | 90 Degrees peel strength of cured layer 20 [N/25mm] | 0.83 | 2.87 | Sample broken | 2.24 | Sample broken | Sample broken | Sample broken | 1.75 | 0.32 | 0.31 |
| | Indentation hardness of surface of cured layer 20 [N/mm$^2$] | 35.8 | 69.3 | 77.1 | 75.7 | 204.8 | 150.9 | 169.6 | 186.1 | 75.5 | 35.4 |
| | $\Delta$xy | 0.031 | 0.031 | 0.032 | 0.030 | 0.037 | 0.035 | 0.036 | 0.034 | 0.036 | 0.035 |

EP 4 512 835 A1

18

[Table 2]

[Table 2]

Table 2

| Composition of active energy ray-curable resin composition (parts by weight) | | | Examples | | | | | | | | | |
|---|---|---|---|---|---|---|---|---|---|---|---|---|
| | | | 11 | 12 | 13 | 14 | 15 | 16 | 17 | 18 | 19 | 20 |
| | Components (a1), (a2) | THFA (molecular weight: 156.2) | | | | | | | | | | |
| | | ACMO (molecular weight: 141.2) | | | | | 20.0 | | | | | |
| | | DEAA (molecular weight: 127.1) | | | | | | | | | | |
| | | DMAA (molecular weight: 99.1) | | | | | | | | | | |
| | | 2HBMA (molecular weight: 158.2) | | | | | | | | | | |
| | | M-101A (molecular weight: 236.3) | | | | | | | | | | |
| | | BZA (molecular weight: 162.2) | | | | | | | | | | |
| | | AOMA (molecular weight: 156.2) | 40.0 | 60.0 | 60.0 | 60.0 | | 40.0 | 20.0 | 20.0 | 20.0 | 20.0 |
| | | VMOX (molecular weight: 127.1) | | | | | | | | | | |
| | | NVP (molecular weight: 111.1) | | | | | | | | | | |
| | | IBOA (molecular weight: 208.3) | | | | | | | | | | |
| | Components (b1), (b2), (b3) | M-220 (molecular weight: 300.3) | 50.0 | 30.0 | 30.0 | 30.0 | | 40.0 | | | | |
| | | HPP-A (molecular weight: 312.4) | | | | | 80.0 | | | | | |
| | | M-8060 (weight average molecular weight: 2479) | | | | | | 20.0 | 40.0 | 40.0 | 40.0 | 40.0 |
| | | EBECRYL 1830 (weight average molecular weight: 3698) | | | | | | | | | | |
| | | EBECRYL 1710 (weight average molecular weight: 39429) | 10.0 | 10.0 | 10.0 | 10.0 | | | 40.0 | 40.0 | 40.0 | 40.0 |
| | | BR-107 (weight average molecular weight: 74660) | | | | | | | | | | |
| | | DEGALAN 64/12N (weight average molecular weight: 64716) | | | | | | | | | | |

| | | | Examples | | | | | | | | | |
|---|---|---|---|---|---|---|---|---|---|---|---|---|
| | | | 11 | 12 | 13 | 14 | 15 | 16 | 17 | 18 | 19 | 20 |
| | | MB-7497 (weight average molecular weight: 56353) | | | | | | | | | | |
| | | M-6100 (weight average molecular weight: 1662) | | | | | | | | | | |
| | | EBECRYL 130 (molecular weight: 304.4) | | | | | | | | | | |
| | | Epoxy Ester 3000A (weight average molecular weight: 1160) | | | | | | | | | | |
| | | EBECRYL 767 (weight average molecular weight: 19447) | | | | | | | | | | |
| | Curable monomers other than components (a1), (a2), (b1), (b2), (b3) | HDDA (molecular weight: 226.3) | | | | | | | | | | |
| | | DPGDA (molecular weight: 242.3) | | | | | | | | | | |
| | | TMPTA (molecular weight: 296.3) | | | | | | | | | | |
| | Photopolymerization initiator | HCPK | 2.0 | 2.0 | 3.0 | 5.0 | 2.0 | 2.0 | 2.0 | 2.0 | | |
| | | TPO | | | | | | | | | | |
| | | BAPO | | | | | | | | | 0.3 | 0.6 | 0.8 |
| | | HMPP | | | | | | | | | | |
| | Additives | AO-60 | | | | | | | | | | |
| | | Irganox 1035 | | | | | | | | | | |
| Contents of components (wt%) | | Components (a1), (a2) | 39.2 | 58.8 | 58.3 | 57.1 | 19.6 | 39.2 | 19.6 | 19.6 | 19.9 | 19.8 |
| | | Components (b1), (b2), (b3) | 58.8 | 39.2 | 38.8 | 38.1 | 78.4 | 58.8 | 78.4 | 78.2 | 79.5 | 79.4 |
| | | Curable monomers other than components (a1), (a2), (b1), (b2), (b3) | 0.0 | 0.0 | 0.0 | 0.0 | 0.0 | 0.0 | 0.0 | 0.0 | 0.0 | 0.0 |
| | | Photopolymerization initiator | 2.0 | 2.0 | 2.9 | 4.8 | 2.0 | 2.0 | 2.0 | 2.2 | 0.6 | 0.8 |
| | | Additives | 0.0 | 0.0 | 0.0 | 0.0 | 0.0 | 0.0 | 0.0 | 0.0 | 0.0 | 0.0 |
| Laminate | | Thickness of resin substrate 11 [μm] | 40 | 40 | 40 | 40 | 40 | 40 | 40 | 40 | 40 | 40 |

EP 4 512 835 A1

(continued)

| Results of evaluations | | Examples | | | | | | | | | |
|---|---|---|---|---|---|---|---|---|---|---|---|
| | | 11 | 12 | 13 | 14 | 15 | 16 | 17 | 18 | 19 | 20 |
| | Thickness of primer layer 12 [μm] | 0.3 | 0.3 | 0.3 | 0.3 | 0.3 | 0.3 | 0.3 | 0.3 | 0.3 | 0.3 |
| | Thickness of cured layer 20 [μm] | 15 | 15 | 15 | 15 | 15 | 15 | 15 | 15 | 15 | 15 |
| | Thickness of diffusion layer [μm] | 2 | 2 | 3 | 3 | 1 | 1 | 1 | 1 | 2 | 1 |
| | Liquid viscosity of active energy ray-curable resin composition [mPa·s] | 9 | 6 | 7 | 7 | 17 | 8 | 510 | 510 | 510 | 510 |
| | Absorbance ratio $(A_1)/(A_0)$ in active energy ray-curable resin composition | 1.9 | 1.9 | 1.9 | 1.9 | 3.5 | 4.4 | 1.8 | 1.9 | 1.8 | 1.8 |
| | Absorbance ratio $(A_1)/(A_0)$ in cured product | 1.0 | 1.0 | 1.0 | 1.1 | 2.8 | 3.9 | 1.6 | 1.6 | 1.7 | 1.7 |
| | Reaction ratio of cured product [%] | 89.9 | 87.6 | 88.9 | 91.1 | 83.2 | 95.7 | 70.0 | 71.0 | 63.0 | 66.0 |
| | Total light transmittance [%] | 92.3 | 92.1 | 92.3 | 92.2 | 92.2 | 92.1 | 92.1 | 92.0 | 92.1 | 92.1 |
| | Haze [%] | 0.77 | 0.79 | 0.75 | 0.74 | 0.69 | 1.17 | 1.04 | 1.06 | 1.05 | 1.05 |
| | Refractive index of active energy ray-curable resin composition | 1.457 | 1.456 | 1.457 | 1.459 | 1.469 | 1.462 | 1.476 | 1.475 | 1.475 | 1.476 |
| | Refractive index of cured film | 1.502 | 1.503 | 1.505 | 1.509 | 1.500 | 1.507 | 1.513 | 1.510 | 1.509 | 1.510 |
| | 90 Degrees peel strength of cured layer 20 [N/25mm] | Sample broken | Sample broken | Sample broken | Sample broken | Sample broken | Sample broken | Sample broken | 5.49 | Sample broken | 5.61 |
| | Indentation hardness of surface of cured layer 20 [N/mm²] | 172.1 | 179.8 | 181.8 | 200.9 | 241.3 | 200.1 | 226.0 | 220.9 | 195.2 | 209.1 |
| | Δxy | 0.033 | 0.035 | 0.034 | 0.036 | 0.037 | 0.034 | 0.034 | 0.035 | 0.035 | 0.035 |

[Table 3]

[Table 3]

Table 3

| | | | Examples | | | | | | | | | |
| | | | 21 | 22 | 23 | 24 | 25 | 26 | 27 | 28 | 29 | 30 |
|---|---|---|---|---|---|---|---|---|---|---|---|---|
| Composition of active energy ray-curable resin composition (parts by weight) | Components (a1), (a2) | THFA (molecular weight: 156.2) | | | | | | | | | | |
| | | ACMO (molecular weight: 141.2) | | | | | | | | | | |
| | | DEAA (molecular weight: 127.1) | | | | | | | | | | |
| | | DMAA (molecular weight: 99.1) | | | | | | | | | | |
| | | 2HBMA (molecular weight: 158.2) | | | | | | | | | | |
| | | M-101A (molecular weight: 236.3) | | | | | | | | | | |
| | | BZA (molecular weight: 162.2) | | | | | | | | | | |
| | | AOMA (molecular weight: 156.2) | 25.0 | 25.0 | 25.0 | 25.0 | 25.0 | 25.0 | 25.0 | 25.0 | 25.0 | 25.0 |
| | | VMOX (molecular weight: 127.1) | | | | | | | | | | |
| | | NVP (molecular weight: 111.1) | | | | | | | | | | |
| | | IBOA (molecular weight: 208.3) | | | | | | | | | | |
| | Components (b1), (b2), (b3) | M-220 (molecular weight: 300.3) | | | | | | | | | | |
| | | HPP-A (molecular weight: 312.4) | | | | | | | | | | |
| | | M-8060 (weight average molecular weight: 2479) | | | | | | | | | | |
| | | EBECRYL 1830 (weight average molecular weight: 3698) | | | | | 30.0 | 30.0 | | | | |
| | | EBECRYL 1710 (weight average molecular weight: 39429) | | | | | 45.0 | 45.0 | | | | |
| | | BR-107 (weight average molecular weight: 74660) | 25.0 | 25.0 | 25.0 | | | | | 25.0 | 25.0 | 25.0 |
| | | DEGALAN 64/12N (weight average molecular weight: 64716) | | | | | | | 25.0 | | | |

| | | | Examples | | | | | | | | | |
|---|---|---|---|---|---|---|---|---|---|---|---|---|
| | | | 21 | 22 | 23 | 24 | 25 | 26 | 27 | 28 | 29 | 30 |
| Curable monomers other than components (a1), (a2), (b1), (b2), (b3) | | MB-7497 (weight average molecular weight: 56353) | | | | 25.0 | | | | | | |
| | | M-6100 (weight average molecular weight: 1662) | | | | | | | | | | |
| | | EBECRYL 130 (molecular weight: 304.4) | | | | | | | | | | |
| | | Epoxy Ester 3000A (weight average molecular weight: 1160) | | | | | | | | | | |
| | | EBECRYL 767 (weight average molecular weight: 19447) | | | | | | | | | | |
| | | HDDA (molecular weight: 226.3) | | | | 25.0 | | | | | | |
| | | DPGDA (molecular weight: 242.3) | 50.0 | 50.0 | 50.0 | | | | 50.0 | 50.0 | 50.0 | 50.0 |
| | | TMPTA (molecular weight: 296.3) | | | | 25.0 | | | | | | |
| | Photopolymerization initiator | HCPK | | | | 2.0 | 2.0 | | | | | |
| | | TPO | | 1.2 | 2.0 | | | | | | 2.0 | |
| | | BAPO | 0.8 | | | | | 0.6 | 0.6 | 0.6 | | 0.6 |
| | | HMPP | | | | | | | | | | |
| | Additives | AO-60 | | | | | | | | | 1.0 | |
| | | Irganox 1035 | | | | | | | | 0.2 | | |
| Contents of components (wt%) | Components (a1), (a2) | | 24.8 | 24.7 | 24.5 | 24.5 | 24.5 | 24.9 | 24.9 | 24.8 | 24.3 | 24.9 |
| | Components (b1), (b2), (b3) | | 24.8 | 24.7 | 24.5 | 24.5 | 73.5 | 74.6 | 24.9 | 24.8 | 24.3 | 24.9 |
| | Curable monomers other than components (a1), (a2), (b1), (b2), (b3) | | 49.6 | 49.4 | 49.0 | 49.0 | 0.0 | 0.0 | 49.7 | 49.6 | 48.5 | 49.7 |
| | Photopolymerization initiator | | 0.8 | 1.2 | 2.0 | 2.0 | 2.0 | 0.6 | 0.6 | 0.6 | 1.9 | 0.6 |
| | Additives | | 0.0 | 0.0 | 0.0 | 0.0 | 0.0 | 0.0 | 0.0 | 0.2 | 1.0 | 0.0 |
| Laminate | Thickness of resin substrate 11 [μm] | | 40 | 40 | 40 | 40 | 40 | 40 | 40 | 40 | 40 | 40 |

EP 4 512 835 A1

25

| | | Examples | | | | | | | | | |
|---|---|---|---|---|---|---|---|---|---|---|---|
| | | 21 | 22 | 23 | 24 | 25 | 26 | 27 | 28 | 29 | 30 |
| | Thickness of primer layer 12 [$\mu$m] | 0.3 | 0.3 | 0.3 | 0.3 | 0.3 | 0.3 | 0.3 | 0.3 | 0.3 | 0.3 |
| | Thickness of cured layer 20 [$\mu$m] | 15 | 15 | 15 | 15 | 15 | 15 | 15 | 15 | 15 | 15 |
| Results of evaluations | Thickness of diffusion layer [$\mu$m] | 1 | 1 | 2 | 2 | 1 | 2 | 1 | 2 | 2 | 1 |
| | Liquid viscosity of active energy ray-curable resin composition [mPa · s] | 670 | 670 | 670 | 640 | 675 | 675 | 390 | 815 | 800 | 670 |
| | Absorbance ratio $(A_1)/(A_0)$ in active energy ray-curable resin composition | 1.4 | 1.4 | 1.4 | 1.4 | 1.8 | 1.8 | 1.4 | 1.4 | 1.4 | 1.5 |
| | Absorbance ratio $(A_1)/(A_0)$ in cured product | 1.2 | 1.2 | 1.3 | 1.4 | 1.8 | 1.7 | 1.2 | 1.2 | 1.3 | 1.2 |
| | Reaction ratio of cured product [%] | 78.0 | 82.0 | 84.0 | 79.0 | 76.0 | 70.0 | 75.0 | 74.0 | 81.0 | 75.0 |
| | Total light transmittance [%] | 92.2 | 92.2 | 92.2 | 92.1 | 92.0 | 92.1 | 92.4 | 92.2 | 92.1 | 92.2 |
| | Haze [%] | 1.07 | 1.03 | 1.04 | 1.09 | 1.05 | 1.07 | 0.43 | 1.00 | 1.00 | 1.03 |
| | Refractive index of active energy ray-curable resin composition | 1.461 | 1.461 | 1.461 | 1.469 | 1.473 | 1.475 | 1.461 | 1.463 | 1.465 | 1.460 |
| | Refractive index of cured film | 1.496 | 1.497 | 1.500 | 1.504 | 1.516 | 1.510 | 1.495 | 1.497 | 1.498 | 1.496 |
| | 90 Degrees peel strength of cured layer 20 [N/25mm] | Sample broken | Sample broken | Sample broken | Sample broken | Sample broken | 5.24 | 0.38 | Sample broken | Sample broken | Sample broken |
| | Indentation hardness of surface of cured layer 20 [N/mm$^2$] | 166.5 | 179.0 | 195.1 | 202.8 | 204.8 | 173.3 | 285.8 | 177.9 | 194.8 | 159.5 |
| | $\Delta$xy | 0.034 | 0.032 | 0.034 | 0.033 | 0.033 | 0.034 | 0.035 | 0.037 | 0.037 | 0.030 |

[Table 4]

[Table 4]

Table 4

| | | | Comparative Examples | | | | | | | |
|---|---|---|---|---|---|---|---|---|---|---|
| | | | 1 | 2 | 3 | 4 | 5 | 6 | 7 | 8 |
| Composition of active energy ray-curable resin composition (parts by weight) | Components (a1), (a2) | THFA (molecular weight: 156.2) | | | | | | | | |
| | | ACMO (molecular weight: 141.2) | | | 60.0 | 28.5 | | | | |
| | | DEAA (molecular weight: 127.1) | | | | | | | | |
| | | DMAA (molecular weight: 99.1) | | | | | | | | |
| | | 2HBMA (molecular weight: 158.2) | | | | | | | | |
| | | M-101A (molecular weight: 236.3) | | | | | | | | |
| | | BZA (molecular weight: 162.2) | | | | | | | | |
| | | AOMA (molecular weight: 156.2) | | | | | 48.5 | 14.0 | 4.0 | 90.0 |
| | | VMOX (molecular weight: 127.1) | 40.0 | | | | | | | |
| | | NVP (molecular weight: 111.1) | | 40.0 | | | | | | |
| | | IBOA (molecular weight: 208.3) | | | | | | 66.0 | | |
| | Components (b1), (b2), (b3) | M-220 (molecular weight: 300.3) | 50.0 | 50.0 | 30.0 | | | | 86.0 | |
| | | HPP-A (molecular weight: 312.4) | | | | | | | | |
| | | M-8060 (weight average molecular weight: 2479) | | | | | | | | |
| | | EBECRYL 1830 (weight average molecular weight: 3698) | | | | | | | | |
| | | EBECRYL 1710 (weight average molecular weight: 39429) | 10.0 | 10.0 | 10.0 | | | | 10.0 | |
| | | BR-107 (weight average molecular weight: 74660) | | | | | | | | |
| | | DEGALAN 64/12N (weight average molecular weight: 64716) | | | | | | | | |
| | | MB-7497 (weight average molecular weight: 56353) | | | | | | | | |

(continued)

| | | Comparative Examples | | | | | | | |
|---|---|---|---|---|---|---|---|---|---|
| | | 1 | 2 | 3 | 4 | 5 | 6 | 7 | 8 |
| | M-6100 (weight average molecular weight: 1662) | | | | 66.7 | | | | |
| | EBECRYL 130 (molecular weight: 304.4) | | | | | | | | 10.0 |
| | Epoxy Ester 3000A (weight average molecular weight: 1160) | | | | | 48.5 | | | |
| | EBECRYL 767 (weight average molecular weight: 19447) | | | | | | 20.0 | | |
| Curable monomers other than components (a1), (a2), (b1), (b2), (b3) | HDDA (molecular weight: 226.3) | | | | | | | | |
| | DPGDA (molecular weight: 242.3) | | | | | | | | |
| | TMPTA (molecular weight: 296.3) | | | | | | | | |
| Photopolymerization initiator | HCPK | 2.0 | 2.0 | 2.0 | 4.8 | 3.0 | | 2.0 | |
| | TPO | | | | | | 0.1 | | |
| | BAPO | | | | | | | | 5.0 |
| | HMPP | | | | | | 0.2 | | |
| Additives | AO-60 | | | | | | | | |
| | Irganox 1035 | | | | | | | | |
| Contents of components (wt%) | Components (a1), (a2) | 39.2 | 39.2 | 58.8 | 28.5 | 48.5 | 79.8 | 3.9 | 85.7 |
| | Components (b1), (b2), (b3) | 58.8 | 58.8 | 39.2 | 66.7 | 48.5 | 20.0 | 94.1 | 9.5 |
| | Curable monomers other than components (a1), (a2), (b1), (b2), (b3) | 0.0 | 0.0 | 0.0 | 0.0 | 0.0 | 0.0 | 0.0 | 0.0 |
| | Photopolymerization initiator | 2.0 | 2.0 | 2.0 | 4.8 | 3.0 | 0.2 | 2.0 | 4.8 |
| | Additives | 0.0 | 0.0 | 0.0 | 0.0 | 0.0 | 0.0 | 0.0 | 0.0 |
| Laminate | Thickness of resin substrate 11 [μm] | 40 | 40 | 40 | 40 | 40 | 40 | 40 | 40 |
| | Thickness of primer layer 12 [μm] | 0.3 | 0.3 | 0.3 | 0.3 | 0.3 | 0.3 | 0.3 | 0.3 |
| | Thickness of cured layer 20 [μm] | 15 | 15 | 15 | 15 | 15 | 15 | 15 | 10 |
| Results of evaluations | Thickness of diffusion layer [μm] | 1 | 1 | 1 | 2 | 3 | 1 | 0 | 2 |

(continued)

| | Comparative Examples | | | | | | | |
|---|---|---|---|---|---|---|---|---|
| | 1 | 2 | 3 | 4 | 5 | 6 | 7 | 8 |
| Liquid viscosity of active energy ray-curable resin composition [mPa · s] | 17 | 11 | 20 | 110 | 41 | 37 | 20 | 3 |
| Absorbance ratio $(A_1)/(A_0)$ in active energy ray-curable resin composition | 9.9 | 10.9 | 7.9 | 6.2 | 2.9 | 0.4 | 1.3 | 1.7 |
| Absorbance ratio $(A_1)/(A_0)$ in cured product | 4.9 | 5.8 | 5.4 | 4.7 | 1.7 | 0.4 | 0.9 | 1.0 |
| Reaction ratio of cured product [%] | 99.8 | 99.5 | 92.4 | 99.8 | 74.0 | 72.3 | 94.6 | 91.8 |
| Total light transmittance [%] | 92.3 | 92.2 | 92.0 | 91.6 | 91.5 | Sampling impossible | 92.2 | Sampling impossible |
| Haze [%] | 0.72 | 0.77 | 0.77 | 1.24 | 1.41 | Sampling impossible | 1.08 | Sampling impossible |
| Refractive index of active energy ray-curable resin composition | 1.470 | 1.482 | 1.482 | 1.512 | 1.505 | 1.475 | 1.457 | 1.463 |
| Refractive index of cured film | 1.502 | 1.512 | 1.522 | 1.541 | 1.541 | Sampling impossible | 1.492 | Sampling impossible |
| 90 Degrees peel strength of cured layer 20 [N/25mm] | Sample broken | Sample broken | Sample broken | Sample broken | Sample broken | 1.30 | 0.19 | Sample broken |
| Indentation hardness of surface of cured layer 20 [N/mm$^2$] | 204.1 | 196.0 | 239.9 | 191.2 | 190.7 | Sampling impossible | 191.2 | Sampling impossible |
| Δxy | 0.043 | 0.038 | 0.042 | 0.046 | 0.042 | Sampling impossible | 0.033 | Sampling impossible |

The compounds used in Examples and Comparative Examples are shown below. Here, for the product below composed of a plurality of components, the molecular weight shown below is that of a component having a larger molecular weight.

· THFA: tetrahydrofurfuryl acrylate (product name "Viscoat #150", available from OSAKA ORGANIC CHEMICAL INDUSTRY LTD., molecular weight: 156.2)

· ACMO: acryloyl morpholine (product name "ACMO", available from KJ Chemicals Corporation, molecular weight: 141.2)

· DEAA: diethyl acrylamide (product name "DEAA", available from KJ Chemicals Corporation, molecular weight: 127.1)

· DMAA: dimethyl acrylamide (product name "DMAA", available from KJ Chemicals Corporation, molecular weight: 99.1)

· 2HBMA: 2-hydroxybutyl methacrylate (product name "2-Hydroxybutyl Methacrylate", available from Tokyo Chemical Industry Co., Ltd., molecular weight: 158.2)

· M-101A: phenol EO modified acrylate (product name "ARONIX M-101A", available from TOAGOSEI CO., LTD., molecular weight: 236.3)

· BZA: benzyl acrylate (product name "Viscoat #160 BZA", available from OSAKA ORGANIC CHEMICAL INDUSTRY LTD., molecular weight: 162.2)

· AOMA: α-allyloxymethyl acrylic acid ester (product name "AOMA", available from NIPPON SHOKUBAI CO., LTD., molecular weight: 156.2)

· M-220: polypropylene glycol diacrylate (product name "ARONIX M-220", available from TOAGOSEI CO., LTD., molecular weight: 300.3)

· VMOX: vinyl methyl oxazolidinone (product name "VMOX", available from BASF SE, molecular weight: 127.1)

· NVP: N-vinylpyrrolidone ((product name "1-Vinyl-2-pyrrolidone", available from Tokyo Chemical Industry Co., Ltd., molecular weight: 111.1)

· IBOA: isobornyl acrylate (product name "IBOA-B", available from DAICEL-ALLNEX LTD., molecular weight: 208.3)

· HPP-A: hydroxypivalic acid neopentyl glycol acrylic acid adduct (product name "LIGHT ACRYLATE HPP-A", available from Kyoeisha Chemical Co., Ltd., molecular weight: 312.4)

· M-8060: polyester acrylate (product name "ARONIX M-8060", available from TOAGOSEI CO., LTD., weight average molecular weight: 2479)

· EBECRYL 1830: polyester acrylate (product name "EBECRYL 1830", available from DAICEL-ALLNEX LTD., weight average molecular weight: 3698)

· EBECRYL 1710: acrylic polymer-containing solution (product name "EBECRYL 1710", available from DAICEL-ALLNEX LTD., weight average molecular weight: 39429)

· BR-107: acrylic polymer powder (product name "DIANAL BR-107", available from Mitsubishi Chemical Corporation, weight average molecular weight: 74660)

· DEGALAN 64/12N: acrylic polymer powder (product name "DEGALAN 64/12N", available from ROHM Co., Ltd., weight average molecular weight: 64716)

· MB-7497: acrylic polymer powder (product name "DIANAL MB-7497", available from Mitsubishi Chemical Corporation, weight average molecular weight: 56353)

· M-6100: polyester acrylate (product name "ARONIX M-6100", available from TOAGOSEI CO., LTD., weight average molecular weight: 1662)

· EBECRYL 130: tricyclodecane dimethanol diacrylate (product name "EBECRYL 130", available from DAICEL-ALLNEX LTD., molecular weight: 304.4)

· 3000A: bisphenol A diglycidyl ether acrylic acid adduct (product name "Epoxy Ester 3000A", available from Kyoeisha Chemical Co., Ltd., weight average molecular weight: 1160)

· EBECRYL 767: acrylic polymer-containing solution (product name "EBECRYL 767", available from DAICEL-ALLNEX LTD., weight average molecular weight: 19447)

· HDDA: 1,6-hexanediol diacrylate (product name "HDDA", available from DAICEL-ALLNEX LTD., molecular weight: 226.3)

· DPGDA: dipropylene glycol diacrylate (product name "M222", available from MIWON, molecular weight: 242.3)

· TMPTA: trimethylolpropane triacrylate (product name "M-309", available from TOAGOSEI CO., LTD., molecular weight: 296.3)

· HCPK: 1-hydroxycyclohexyl phenyl ketone (product name "Omnirad 184", available from IGM Resins B.V., α-hydroxy ketone photopolymerization initiator)

· TPO: 2,4,6-trimethylbenzoyl-diphenyl-phosphine oxide (product name "Diphenyl(2,4,6-trimethylbenzoyl)phosphine Oxide", available from Tokyo Chemical Industry Co., Ltd., acylphosphine oxide photopolymerization initiator)

· BAPO: bis(2,4,6-trimethylbenzoyl)phenylphosphine oxide (product name "Phenylbis(2,4,6-trimethylbenzoyl)phosphine Oxide", available from Tokyo Chemical Industry Co., Ltd., acylphosphine oxide photopolymerization initiator)
· HMPP: 2-hydroxy-2-methylpropiophenone (product name "2-Hydroxy-2-methylpropiophenone", available from Tokyo Chemical Industry Co., Ltd., $\alpha$-hydroxy ketone photopolymerization initiator)
· AO-60: pentaerythritol tetrakis[3-(3,5-di-tert-butyl-4-hydroxyphenyl)propionate] (product name "Adekastab AO-60", available from ADEKA Corporation, antioxidant)
· IRGANOX 1035: thiodiethylene bis[3-(3,5-di-tert-butyl-4-hydroxyphenyl)propionate] (product name "IRGANOX 1035", available from BASF SE, antioxidant)

Tables 1 and 2 show that according to the active energy ray-curable resin compositions wherein the total content of the component (a1) which was a compound having one ethylenically unsaturated group and having a molecular weight of 90 or more and less than 300 and/or the component (a2) which was a 1,6-diene type divinyl compound having a molecular weight of 90 or more and less than 300 was 5% by weight or more and 70% by weight or less relative to 100% by weight of the entire active energy ray-curable resin composition, the absorbance values $(A_0)$ and $(A_1)$ satisfied $(A_1)/(A_0) <$ 7.9, and the refractive index was 1.405 or more and less than 1.505, the value of $\Delta xy$ was small, and the change in the hue caused by the light guide distance was effectively suppressed (Examples 1 to 30).
In contrast, when the relation between the absorbance values $(A_0)$ and $(A_1)$ was $(A_1)/(A_0) \geq 7.9$ or the refractive index was 1.505 or more, the value of $\Delta xy$ was large, and the hue was significantly changed by the light guide distance (Comparative Examples 1 to 5). When the content of the component (a1) and/or the component (a2) was 5% by weight or less or 70% by weight or more, adhesion to the substrate was insufficient, or a sample could not be prepared due to poor film forming properties (Comparative Examples 6 to 8).

Reference Signs List

10...substrate film
11...resin substrate
12...primer layer
20...cured layer
20a...layer composed of active energy ray-curable resin composition
30 to 39...roll
40...T-die
50...active energy ray irradiation apparatus
60...film mold

**Claims**

1.   An active energy ray-curable resin composition comprising at least one of a component (a1) and a component (a2), wherein the total amount of the component (a1) and the component (a2) is 5% by weight or more and 70% by weight or less based on 100% by weight of the entire active energy ray-curable resin composition, and absorbance values $(A_0)$ and $(A_1)$ in an IR spectrum obtained in FT-IR measurement satisfy $(A_1)/(A_0) <$ 7.9, and the active energy ray-curable resin composition has a refractive index of 1.405 or more and less than 1.505,

where the component (a1) is a compound having one ethylenically unsaturated group and having a molecular weight of 90 or more and less than 300,
the component (a2) is a 1,6-diene type divinyl compound having a molecular weight of 90 or more and less than 300,
$(A_0)$ is the maximum value of the absorbance at a wave number in the range of 2900 to 2960 cm$^{-1}$, and
$(A_1)$ is the maximum value of the absorbance at a wave number in the range of 1610 to 1700 cm$^{-1}$ and a wave number in the range of 1750 to 1780 cm$^{-1}$.

2.   The active energy ray-curable resin composition according to claim 1, wherein the component (a1) is at least one selected from the group consisting of (meth)acrylic acid esters having an oxygen-containing heterocycle structure, (meth)acrylic acid esters having an aromatic ring, chain (meth)acrylamides, and (meth)acrylic acid esters having a hydroxyl group.

3.   The active energy ray-curable resin composition according to claim 1 or 2, wherein the component (a2) is an $\alpha$-

allyloxymethyl acrylic acid ester.

4. The active energy ray-curable resin composition according to any one of claims 1 to 3, further comprising at least one of a component (b1), a component (b2), and a component (b3),

where the component (b1) is a compound having two or more ethylenically unsaturated groups and having a molecular weight of 300 or more and less than 1,000,
the component (b2) is a compound having two or more ethylenically unsaturated groups and having a weight average molecular weight of 1,000 or more and less than 150,000, and
the component (b3) is an acrylic polymer having a weight average molecular weight of 1,000 or more and less than 150,000.

5. The active energy ray-curable resin composition according to any one of claims 1 to 4, wherein the component (b2) is at least one selected from the group consisting of polyester (meth)acrylate, polyether (meth)acrylate, epoxy (meth) acrylate, urethane (meth)acrylate, and acrylic (meth)acrylate.

6. The active energy ray-curable resin composition according to any one of claims 1 to 5, further comprising an $\alpha$-hydroxyketone compound as a photoinitiator.

7. The active energy ray-curable resin composition according to any one of claims 1 to 6, wherein the viscosity at 25°C is 4 mPa·s or larger.

8. The active energy ray-curable resin composition according to any one of claims 1 to 7, which is used for forming a cured product layer on a resin substrate.

9. A cured product formed from the active energy ray-curable resin composition according to any one of claims 1 to 8.

10. The cured product according to claim 9, wherein the absorbance values $(A_0)$ and $(A_1)$ in an IR spectrum obtained in FT-IR measurement satisfy $(A_1)/(A_0) < 4.9$.

11. The cured product according to claim 9 or 10, wherein the cured product has a refractive index of 1.441 or more and less than 1.541.

12. A laminate including a cured product layer on a resin substrate, the cured product layer being composed of the cured product according to any one of claims 9 to 11.

13. The laminate according to claim 12, wherein the resin substrate is one selected from the group consisting of acrylic resin substrates, carbonate resin substrates, cyclic olefin resin substrates, and cellulose resin substrates.

14. The laminate according to claim 12 or 13, wherein the laminate includes a primer layer between the resin substrate and the cured product layer.

15. The laminate according to claim 14, wherein the primer layer is a urethane resin layer.

16. The laminate according to claim 14 or 15, wherein the primer layer has a thickness of 0.05 to 1 $\mu$m.

17. The laminate according to any one of claims 12 to 16, further including a diffusion region having a thickness of 1 $\mu$m or more in the resin substrate, a component of the cured product being present in the diffusion region.

18. The laminate according to any one of claims 12 to 17, wherein the 90° peel strength between each pair of the layers constituting the laminate is 0.3 N/25 mm or more.

19. The laminate according to any one of claims 12 to 18, wherein the resin substrate has a thickness of 10 to 100 $\mu$m.

20. The laminate according to any one of claims 12 to 19, wherein the cured product layer has a thickness of 1 to 50 $\mu$m.

21. The laminate according to any one of claims 12 to 20, wherein the laminate has a total light transmittance of 90% or more.

22. The laminate according to any one of claims 12 to 21, wherein the cured product layer has a surface with an indentation hardness of 30 N/mm2 or more.

23. The laminate according to any one of claims 12 to 22, wherein the surface of the cured product layer is finely patterned.

24. A cured product formed from an active energy ray-curable resin composition comprising at least one of a component (a1) and a component (a2),

wherein absorbance values $(A_0)$ and $(A_1)$ in an IR spectrum obtained in FT-IR measurement satisfy $(A_1)/(A_0) <$ 4.9, and the cured product has a refractive index of 1.441 or more and less than 1.541,
where the component (a1) is a compound having one ethylenically unsaturated group and having a molecular weight of 90 or more and less than 300,
the component (a2) is a 1,6-diene type divinyl compound having a molecular weight of 90 or more and less than 300,
$(A_0)$ is the maximum value of the absorbance at a wave number in the range of 2900 to 2960 cm$^{-1}$, and
$(A_1)$ is the maximum value of the absorbance at a wave number in the range of 1610 to 1700 cm$^{-1}$ and a wave number in the range of 1750 to 1780 cm$^{-1}$.

FIG. 1

FIG. 2

FIG. 3

(A)

Recess

L

4B    4B'

Z
Y
X

(B)

Recess

H
W

$\theta_a$    $\theta_b$

Z
Y
X

FIG. 4

FIG. 5

**EP 4 512 835 A1**

# INTERNATIONAL SEARCH REPORT

International application No.

**PCT/JP2023/015664**

## A. CLASSIFICATION OF SUBJECT MATTER

*C08F 20/00*(2006.01)i; *B32B 27/16*(2006.01)i; *C08F 2/44*(2006.01)i; *C08F 20/26*(2006.01)i; *C08F 220/26*(2006.01)i; *C08F 290/02*(2006.01)i
FI:   C08F20/00; C08F220/26; C08F20/26; C08F290/02; C08F2/44 C; B32B27/16 101

According to International Patent Classification (IPC) or to both national classification and IPC

## B. FIELDS SEARCHED

Minimum documentation searched (classification system followed by classification symbols)

C08F20/00; B32B27/16; C08F2/44; C08F20/26; C08F220/26; C08F290/02

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

## C. DOCUMENTS CONSIDERED TO BE RELEVANT

| Category* | Citation of document, with indication, where appropriate, of the relevant passages | Relevant to claim No. |
|---|---|---|
| X | JP 2005-263913 A (MITSUBISHI RAYON CO., LTD.) 29 September 2005 (2005-09-29) claims, paragraphs [0034]-[0037], examples | 1-24 |
| X | JP 2021-161136 A (MITSUI CHEMICALS, INC.) 11 October 2021 (2021-10-11) claims, paragraphs [0134], [0146], examples | 1-24 |
| X | JP 2013-205769 A (HOYA CORP.) 07 October 2013 (2013-10-07) claims, paragraphs [0072], [0080], examples | 1-22, 24 |
| X | WO 2019/073836 A1 (O-WELL CORP.) 18 April 2019 (2019-04-18) claims, paragraph [0045], examples | 1-11, 24 |

☐ Further documents are listed in the continuation of Box C.     ☑ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **05 June 2023** | **20 June 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

International application No.

**PCT/JP2023/015664**

| Patent document cited in search report | | | Publication date (day/month/year) | Patent family member(s) | Publication date (day/month/year) |
|---|---|---|---|---|---|
| JP | 2005-263913 | A | 29 September 2005 | (Family: none) | |
| JP | 2021-161136 | A | 11 October 2021 | (Family: none) | |
| JP | 2013-205769 | A | 07 October 2013 | (Family: none) | |
| WO | 2019/073836 | A1 | 18 April 2019 | (Family: none) | |

Form PCT/ISA/210 (patent family annex) (January 2015)

**REFERENCES CITED IN THE DESCRIPTION**

**Patent documents cited in the description**

- JP H08231808 A

- JP 2013524288 A